# EUROPEAN PATENT SPECIFICATION

(11) **EP 4 600 513 B1**
(45) Date of publication and mention of the grant of the patent: **09.12.2026**
(21) Application number: 23881571.6
(22) Date of filing: 26.09.2023
(51) Int. Cl.: G06F 1/16, H04M 1/02

(54) **ROTATING SHAFT MECHANISM AND FOLDABLE ELECTRONIC DEVICE**
DREHWELLENMECHANISMUS UND KLAPPBARE ELEKTRONISCHE VORRICHTUNG
MÉCANISME D'ARBRE ROTATIF ET DISPOSITIF ÉLECTRONIQUE PLIABLE

(30) Priority: 27.10.2022 CN 202211330019
(43) Date of publication of application: 13.08.2025
(73) Proprietor: Honor Device Co., Ltd., Shenzhen, Guangdong 518040 (CN)
(72) Inventor: DONG, Shaohong, Shenzhen, Guangdong 518040 (CN); JIN, Kaifang, Shenzhen, Guangdong 518040 (CN); PENG, Gaofeng, Shenzhen, Guangdong 518040 (CN); SU, Shuai, Shenzhen, Guangdong 518040 (CN); CHEN, Ruihao, Shenzhen, Guangdong 518040 (CN); DONG, Changfu, Shenzhen, Guangdong 518040 (CN)
(74) Representative: Isarpatent
(86) International application number: PCT/CN2023/121552
(87) International publication number: WO 2024/087992

(56) References cited:
- EP-A1- 4 063 996
- WO-A1-2022/052721
- CN-A- 111 357 261
- CN-A- 112 991 953
- CN-A- 113 763 814
- CN-A- 114 464 085
- KR-B1- 102 419 478
- US-A1- 2020 341 509
- US-A1- 2021 208 641
- US-A1- 20240 069 604

## Description

This application claims priority to Chinese Patent Application No. 202211330019.3, entitled "ROTATING SHAFT MECHANISM AND FOLDABLE ELECTRONIC DEVICE" filed with the China National Intellectual Property Administration on October 27, 2022.

### TECHNICAL FIELD

This application relates to the field of electronic devices, and in particular, to a foldable electronic device including a rotating shaft mechanism.

### BACKGROUND

A foldable screen is bendable, so that an electronic device equipped with the foldable screen, namely, a foldable electronic device, can switch between an unfolded state and a folded state. With a relatively large area for display and portability convenience, the foldable electronic device is becoming increasingly popular among consumers.

As a core functional structure of the foldable electronic device, a rotating shaft mechanism is configured to implement relative rotation between two main body portions of the foldable electronic device, so as to unfold or fold the foldable screen through the relative rotation between the two main body portions. When the two main body portions rotate to be coplanar, the foldable electronic device is in the unfolded state, and in this case, the foldable screen is in an unfolded state and has a relatively large display area; and when the two main body portions rotate to overlap with each other, the foldable electronic device is in the folded state and has a small volume, and in this case, the foldable screen is in a folded state.

However, existing rotating shaft mechanisms have complex structures and has poor stability in supporting the foldable screen, affecting a use effect and stability of the foldable screen.
EP 4 063 996 A1 refers to a flexible display as well as a foldable device. The flexible display includes a holding plate provided with a first fixed part, a first bending part, a first connecting part, a main bending part, a second connecting part, a second bending part, and a second fixed part that are sequentially disposed in a first direction. The first fixed part of the holding plate is fixedly connected to a first housing, and the second fixed part is fixedly connected to a second housing. The foldable device further includes a hinge including a main body and a first foldable assembly and a second foldable assembly that are symmetrically disposed with respect to the main body. The first foldable assembly may include a first swing connecting rod, first swing arms, first driven arms, and a first support plate. One end of the first swing arm is rotatably connected to the main body, and the other end of the first swing arm is rotatably connected to the first swing connecting rod. One end of the first driven arm is rotatably connected to the main body, and the other end of the first driven arm is slidably connected to the first swing connecting rod. The first support plate is rotatably connected to the first swing connecting rod, and is slidably connected to the first driven arm. When the first foldable assembly rotates relative to the main body, the first support plate can rotate relative to the first swing connecting rod under driving force of the first driven arm. The holding plate may be further fixedly connected to the first support plate and the second support plate.

### SUMMARY

This application provides a foldable electronic device including a rotating shaft mechanism, as defined in the appended claims. The rotating shaft mechanism has a simple structure and has good stability in supporting a foldable screen, so that a use effect of the foldable screen may be improved, and a risk of failure of the foldable screen may be reduced.

According to an aspect, this application provides a rotating shaft mechanism, used in a foldable electronic device, and including: a shaft cover, a main swing arm, a support plate swing arm, a support plate, and at least one connection frame group, where
the connection frame group includes two connection frames, the two connection frames are respectively located on two sides of the shaft cover in a width direction, and the main swing arm and the support plate swing arm are connected between each connection frame and the shaft cover; a first end of the main swing arm is connected to the connection frame, and a second end of the main swing arm is slidably and rotatably connected to the shaft cover; a first end of the support plate swing arm is connected to the connection frame, and a second end of the support plate swing arm is connected to the shaft cover; and
the support plate extends in a length direction of the shaft cover and is arranged on a side of the shaft cover facing a foldable screen of the foldable electronic device, a side edge of the support plate extends out to a side of the shaft cover and is bridged on the connection frame, and the support plate is connected to the support plate swing arm, where the support plate is a plate-shaped member capable of generating elastic deformation, and the connection frame moves relative to the shaft cover through the main swing arm and the support plate swing arm to switch between an unfolded state and a folded state, to drive the support plate to synchronously switch between an unfolded state and a folded state along with the foldable screen.

In the rotating shaft mechanism provided in this application, a shaft cover is used as a main body support structure, connection frames are arranged on two sides of the shaft cover to form a connection frame group, and the connection frames and the shaft cover are movably connected through a main swing arm and a support plate swing arm, to implement rotation and displacement of the connection frames relative to the shaft cover. A support plate that can generate elastic deformation is arranged on a side of the shaft cover facing a foldable screen. By using the support plate to support a foldable part of the foldable screen, the support plate can provide a good support effect to the foldable part as the foldable part is bent or unfolded, and the support plate performs positioning through the support plate swing arm, so that movement of the support plate is not limited. Through an integrated design of the support plate, a structure of the rotating shaft mechanism may be simplified, and the manufacturing and assembly difficulty of the rotating shaft mechanism is reduced. In addition, the stability in supporting the foldable part of the foldable screen is good, so that the flatness of the foldable screen may be ensured, a phenomenon of occurrence of local stress concentration in the foldable part may be prevented, and a risk of failure of the foldable screen may be reduced.

In a possible implementation, a middle region of the support plate in a width direction is a hollowed portion, and the hollowed portion covers an entire region of the support plate in a length direction.

The middle region of the support plate in the width direction is set to a hollowed portion, so that the bendability performance of the support plate may be improved, and the stability of synchronous movement of the support plate along with the foldable part of the foldable screen is ensured. The hollowed portion covers the entire region of the support plate in the length direction, so that the shape consistency of the support plate in a bent state may be ensured, thereby ensuring that the support plate stably supports the foldable screen.

In a possible implementation, a plurality of strip-shaped openings are distributed in the hollowed portion, and the strip-shaped openings extend in the length direction of the support plate.

A plurality of strip-shaped openings are provided in the middle region of the support plate in the width direction to form the hollowed portion, and the strip-shaped openings extend in the length direction of the support plate, so that the support plate is easily bent in the length direction, and influence on a strength of the support plate in the width direction is small, thereby ensuring the reliability of the support plate.

In a possible implementation, in the width direction of the support plate, adjacent strip-shaped openings are provided in a staggered manner in the length direction of the support plate.

Adjacent strip-shaped openings in the width direction of the support plate are provided in a front-back staggered manner in the length direction of the support plate, so that the strip-shaped openings are distributed in the hollowed portion more uniformly, to ensure good bending performance of the support plate. In addition, a strength difference between different regions of the support plate may be prevented from being excessively large and affecting the reliability of the support plate.

In a possible implementation, the strip-shaped openings include a first strip-shaped opening and a second strip-shaped opening, the first strip-shaped opening is enclosed in a closed shape, and the second strip-shaped opening is in communication with an end surface of the support plate.

A first strip-shaped opening in a closed shape that is totally located between two ends of the support plate in the length direction is provided, so that the bendability performance of the overall support plate is ensured, and a second strip-shaped opening in communication with the end surface of the support plate is provided, so that a disconnected region exists between the two ends of the support plate in the length direction, and the bendability performance of the two ends of the support plate is ensured. Therefore, the consistency of the bendability performance of the support plate in the length direction is ensured, and the reliability of the support plate is ensured.

In a possible implementation, the support plate is a metal plate.

In a possible implementation, one of the support plate and the support plate swing arm is provided with a positioning hole, the other is provided with a positioning column extending to the one, and the positioning column is inserted into the positioning hole.

A positioning hole is provided in one of the support plate and the support plate swing arm and a positioning column extending to the one is arranged at a part on the other corresponding to the positioning hole, so that when the support plate is engaged with and connected to the support plate swing arm, the positioning column is inserted into the positioning hole to implement positioning of the support plate.

In a possible implementation, a blocking edge is arranged at two ends of the shaft cover in a length direction, the blocking edge protrudes from a side surface of the shaft cover facing the foldable screen, and two ends of the support plate in the length direction respectively abut against corresponding blocking edges.

A blocking edge is arranged at the two ends of the shaft cover in the length direction, the blocking edge protrudes from the side surface of the shaft cover facing the foldable screen, and the blocking edges at the two ends of the shaft cover abut against the two corresponding ends of the support plate, so that the support plate is defined between the two ends of the shaft cover, to preliminarily position the support plate.

In a possible implementation, a first rotating shaft is mounted on the connection frame, a first arc-shaped groove is provided on the shaft cover, the main swing arm includes a rotating portion, a connection plate portion, and a first arc-shaped sliding portion sequentially from the first end to the second end, the rotating portion is sleeved on the first rotating shaft, and the first arc-shaped sliding portion slides in the first arc-shaped groove.

A first rotating shaft is mounted on the connection frame and a first arc-shaped groove is provided on the shaft cover, so that the rotating portion of the main swing arm may be sleeved on the first rotating shaft and rotate around the first rotating shaft, the first arc-shaped sliding portion of the main swing arm may extend into the first arc-shaped groove and slide along the first arc-shaped groove, and the connection plate portion of the main swing arm provides a torque for rotation of the main swing arm, thereby implementing rotation of the connection frame relative to the shaft cover and implement movement of the connection frame of getting away from or getting close to the shaft cover.

In a possible implementation, a first sliding groove is provided on the connection frame, a second arc-shaped groove is provided on the shaft cover, the support plate swing arm includes a sliding shaft portion, a connection portion, and a second arc-shaped sliding portion sequentially from the first end to the second end, the sliding shaft portion slides and rotates in the first sliding groove, and the second arc-shaped sliding portion slides in the second arc-shaped groove.

A first sliding groove is provided on the connection frame and a second arc-shaped groove is provided on the shaft cover, so that the sliding shaft portion of the support plate swing arm may slide along the first sliding groove and rotate around an axis thereof, the second arc-shaped sliding portion of the support plate swing arm may extend into the second arc-shaped groove and slide along the second arc-shaped groove, and the connection portion of the support plate swing arm provides a torque for rotation of the support plate swing arm, thereby implementing rotation and displacement of the connection frame relative to the shaft cover. In addition, the support plate swing arm can adjust a movement state in cooperation with movement of the support plate.

In a possible implementation, at least two connection frame groups exist, and the at least two connection frame groups are spaced apart in the length direction of the shaft cover, where
the main swing arm and the support plate swing arm are connected between each of the two connection frames of each connection frame group and the shaft cover.

At least two connection frame groups are spaced apart in the length direction of the shaft cover, so that a firm connection between the rotating shaft mechanism and the first housing as well as the second housing may be ensured, thereby ensuring the stability of the rotating shaft mechanism in driving the first housing and the second housing to move. In addition, each connection frame group is movably connected to the shaft cover through the main swing arm and the support plate swing arm, to ensure the stability of movement of the connection frame group relative to the shaft cover.

In a possible implementation, the rotating shaft mechanism further includes a synchronous damping swing arm, and the synchronous damping swing arm is connected between each of the two connection frames of the at least one connection frame group and the shaft cover, where
a second sliding groove is provided on the connection frame, a synchronous limiting structure is arranged on the shaft cover, the synchronous damping swing arm includes a sliding plate portion and a shaft sleeve portion, the sliding plate portion slides in the second sliding groove, the shaft sleeve portion is connected to the synchronous limiting structure, and the synchronous limiting structure causes the connection frames located on two sides of the shaft cover to synchronously rotate and slide relative to the shaft cover.

A synchronous damping swing arm is connected between the connection frame and the shaft cover, and the synchronous damping swing arm cooperates with the synchronous limiting structure arranged on the shaft cover through the shaft sleeve portion, and extends into the second sliding groove provided on the connection frame through the sliding plate portion and slides in the second sliding groove. The shaft sleeve portion rotates and slides relative to the synchronous limiting structure, through the synchronous limiting structure, the shaft sleeve portions of the synchronous damping swing arms located on the two sides of the shaft cover move synchronously, and the synchronous damping swing arms drive the connection frames on the two sides of the shaft cover to move synchronously, so that the first housing and the second housing move synchronously, thereby ensuring the smoothness and accuracy of movement of the foldable electronic device.

In a possible implementation, the synchronous limiting structure includes a sliding base and two second rotating shafts, the two second rotating shafts are symmetrically arranged on two sides of the shaft cover in the width direction, mounting grooves are provided on two sides of the sliding base, and the two second rotating shafts respectively pass through the mounting grooves on the two sides; and
the shaft sleeve portions of the synchronous damping swing arms on the two sides are respectively sleeved on the second rotating shafts on the two sides and are respectively located in the mounting grooves on the two sides, and the sliding base is configured to drive the shaft sleeve portions on the two sides to synchronously rotate.

Two second rotating shafts are arranged symmetrically on the two sides of the shaft cover in the width direction and a sliding base that can slide in the axial direction is sleeved on the second rotating shaft, so that the shaft sleeve portions of the synchronous damping swing arms on the two sides are respectively sleeved on the two second rotating shafts, the shaft sleeve portions on the two sides are respectively located in the mounting grooves on the two sides of the sliding base, and the shaft sleeve portions of the synchronous damping swing arms on the two sides can transmit power to each other through the sliding base. Therefore, the shaft sleeve portions on the two sides rotate synchronously, and the synchronous damping swing arms on the two sides move synchronously.

In a possible implementation, opposite groove walls of the mounting grooves on the two sides are each provided with at least one guiding protrusion, the guiding protrusions in the mounting grooves on the two sides are symmetrically arranged, the shaft sleeve portions on the two sides are each provided with at least one spiral hole, the spiral holes on the shaft sleeve portions on the two sides are symmetrically provided, and the guiding protrusions extend into the corresponding spiral holes.

Guiding protrusions are arranged symmetrically on the opposite groove walls of the mounting grooves on the two sides of the sliding base and symmetrical spiral holes that cooperate with the corresponding guiding protrusions are provided on the shaft sleeve portions on the two sides, so that when the shaft sleeve portion of the synchronous damping swing arm on one side rotates around the second rotating shaft, through cooperation between the spiral holes on the shaft sleeve portions and the guiding protrusions on the sliding base, power is transmitted to the sliding base to cause the sliding base to slide in the axial direction of the second rotating shaft, and the sliding base then transmits the power to the shaft sleeve portion of the synchronous damping swing arm on the other side through cooperation with the shaft sleeve portion of the synchronous damping swing arm on the other side. Therefore, the shaft sleeve portions of the synchronous damping swing arms on the two sides rotate synchronously.

In a possible implementation, the shaft sleeve portion is provided with at least two spiral holes, and the spiral holes are spaced apart in an axial direction of the shaft sleeve portion.

At least two spiral holes are provided on the shaft sleeve portion and at least two guiding protrusions are correspondingly arranged on the groove wall of the mounting groove, so that through cooperation between the guiding protrusions and the spiral holes, the precision of synchronous movement of the synchronous damping swing arms on the two sides may be improved, and the consistency and stability of opening and closing between the first housing and the second housing. In addition, a friction force during rotation of the synchronous damping swing arms may be decomposed, thereby prolonging a service life of the rotating shaft mechanism.

In a possible implementation, the synchronous limiting structure further includes an assembly base, the assembly base is arranged at an end of the sliding base, and an end of the second rotating shaft corresponding to the assembly base extends out of the sliding base and is connected to the assembly base.

An assembly base is arranged at the end of the second rotating shaft extending out of the sliding base, and the assembly base is connected to the second rotating shaft, so that a sliding range of the sliding base is limited within a length range of the second rotating shaft, and the sliding base is prevented from falling off the second rotating shaft.

In a possible implementation, the rotating shaft mechanism further includes a damping member, and the damping member is mounted on the connection frame and arranged corresponding to the synchronous damping swing arm, where
at least one side of the sliding plate portion corresponding to the shaft cover in the length direction is a force transmission side, the damping member is arranged corresponding to the force transmission side and abuts against the force transmission side, the sliding plate portion slides in the second sliding groove, so that different parts of the force transmission side abut against the damping member to change an elastic deformation amount generated by the damping member.

A damping member is mounted on the connection frame, the damping member is located on the side of the sliding plate portion of the synchronous damping swing arm, a side wall of the sliding plate portion corresponding to the damping member is set to a force transmission side, and the force transmission side abuts against the damping member. When the connection frame moves relative to the shaft cover, as the sliding plate portion slides in the second sliding groove of the connection frame, different parts of the force transmission side of the sliding plate portion abut against the damping member, and the sliding plate portion generate pressure with different magnitudes to the damping member, so that the damping member generates different degrees of elastic deformation, and when the damping member generates a relatively large elastic force to provide a sufficient damping force between the connection frame and the shaft cover, a housing assembly may stay at a semi-unfolded state.

In a possible implementation, the force transmission side includes a concave portion and a convex portion arranged alternately in an extending direction, and as the sliding plate portion slides, the damping member abuts against the concave portion or abuts against the convex portion and generates elastic deformation.

A concave portion and a convex portion are arranged on the force transmission side of the sliding plate portion of the synchronous damping swing arm, in a sliding process of the sliding plate portion, the damping member abuts against the concave portion and the convex portion arranged alternately, the pressure of the force transmission side of the sliding plate portion to the damping member changes, a compression amount generated by the elastic deformation of the damping member changes accordingly, and the elastic force generated by the damping member changes accordingly, so that the damping force between the connection frame and the shaft cover may be changed.

In a possible implementation, two sides of the sliding plate portion corresponding to the shaft cover in the length direction are both force transmission sides, and the force transmission sides on the two sides are each correspondingly provided with the damping member, where
the concave portions and the convex portions of the force transmission sides on the two sides respectively correspond to each other.

The damping member is arranged on the two sides of the sliding plate portion, so that the two sides of the sliding plate portion are both set to force transmission sides, the concave portions and the convex portions arranged on the force transmission sides on the two sides correspond to each other, and acting forces are generated between the two sides of the sliding plate portion and the damping members on the two sides, so that the stability of movement of the sliding plate portion of the synchronous damping swing arm may be improved, thereby improving the stability of movement of the housing assembly. In addition, the damping members on the two sides provide damping forces for rotation of the connection frame relative to the shaft cover, so that the stability of the housing assembly in the semi-unfolded state may be improved.

In a possible implementation, the damping member includes a fixed end, a deformation segment, and a movable end connected sequentially, the fixed end is away from the force transmission side and is fixed to the connection frame, the movable end abuts against the force transmission side, and the deformation segment generates elastic deformation as the movable end moves.

The damping member is designed to include a fixed end, a deformation segment, and a movable end from an end away from the sliding plate portion to an end close to the sliding plate portion, the fixed end is fixed to the connection frame, the movable end abuts against the force transmission side of the sliding plate portion, the movable end moves as the sliding plate portion moves to transmit an acting force to the deformation segment, the deformation segment generates elastic deformation accordingly to provide an elastic force, and the elastic force of the damping member provides the damping force between the connection frame and the shaft cover.

In a possible implementation, the shaft cover includes a cover plate and a plurality of reinforcing portions, the reinforcing portions are arranged at intervals on a side surface of the cover plate facing the foldable screen, and the main swing arm and the support plate swing arm are connected to each reinforcing portion.

Reinforcing portions are arranged on the side surface of the cover plate facing the foldable screen, the reinforcing portions and the cover plate jointly form the shaft cover, and the cover plate may have a small thickness, so that an entire thickness of the shaft cover may be reduced by mounting components such as the main swing arm and the support plate swing arm through the reinforcing portions. In addition, a strength of the shaft cover is ensured, and a reliability requirement of the shaft cover is met.

In a possible implementation, the cover plate is made of a metal material, each of the reinforcing portions is made of a polymer material, and the cover plate and the reinforcing portions are an integrally formed structure.

The cover plate is made of a metal material, and each of the reinforcing portions is made of a polymer material, so that on the basis of meeting a lightening and thinning requirement of the shaft cover, an appearance effect of the shaft cover may be improved, and the strength of the shaft cover may also be improved. In addition, the shaft cover is formed by using an integral formation process, so that the shaft cover has a better integrity, and a structure of the shaft cover is simplified.

In a possible implementation, an arc-shaped slot is provided on a side surface of the shaft cover facing the foldable screen, and the arc-shaped slot is configured to support a bent bottom of the support plate in the folded state, where
the arc-shaped slot is located in a middle region of the shaft cover in the width direction, and the arc-shaped slot extends in the length direction of the shaft cover and covers the reinforcing portions.

An arc-shaped slot is provided on the side surface of the shaft cover facing the foldable screen, the arc-shaped slot is formed on each reinforcing portion, and the arc-shaped slot on each reinforcing portion extends in the length direction of the shaft cover. The arc-shaped slot is located in the middle region of the shaft cover in the width direction, and the arc-shaped slot corresponds to the bent bottom of the support plate, so that when the support plate is in a bent state, the bent bottom is supported in the arc-shaped slot, and the arc-shaped slot may cause the bent bottom of the support plate to be in a natural extended state, thereby preventing the support plate from being squeezed.

According to another aspect, this application provides a foldable electronic device, including a first housing, a second housing, a foldable screen, and the rotating shaft mechanism described above, where
the connection frames on the two sides of the shaft cover of the rotating shaft mechanism are respectively connected to the first housing and the second housing, the foldable screen is located on a side on which the support plate of the rotating shaft mechanism is located, and the foldable screen is connected to the first housing and the second housing.

In the foldable electronic device provided in this application, the rotating shaft mechanism is connected between the first housing and the second housing to form a housing assembly, the first housing and the second housing are driven by the rotating shaft mechanism to move relative to each other, the foldable screen is supported on and fixed to the first housing and the second housing, and the foldable screen is unfolded or folded as the housing assembly moves. In the rotating shaft mechanism, a shaft cover is used as a main body support structure, connection frames are arranged on two sides of the shaft cover to form a connection frame group, and the connection frames and the shaft cover are movably connected through a main swing arm and a support plate swing arm, to implement rotation and displacement of the connection frames relative to the shaft cover. A support plate that can generate elastic deformation is arranged on a side of the shaft cover facing a foldable screen. By using the support plate to support a foldable part of the foldable screen, the support plate can provide a good support effect to the foldable part as the foldable part is bent or unfolded, and the support plate performs positioning through the support plate swing arm, so that movement of the support plate is not limited. Through an integrated design of the support plate, a structure of the rotating shaft mechanism may be simplified, and the manufacturing and assembly difficulty of the rotating shaft mechanism is reduced. In addition, the stability in supporting the foldable part of the foldable screen is good, so that the flatness of the foldable screen may be ensured, a phenomenon of occurrence of local stress concentration in the foldable part may be prevented, and a risk of failure of the foldable screen may be reduced.

In a possible implementation, the foldable screen includes a screen body and a reinforcing sheet, the reinforcing sheet is connected to a side surface of the screen body facing the rotating shaft mechanism, and the reinforcing sheet corresponds to the rotating shaft mechanism.

A reinforcing sheet is arranged on the side surface of the screen body facing the rotating shaft mechanism and at a part corresponding to the rotating shaft mechanism, and the reinforcing sheet may improve a strength of the foldable screen to provide an auxiliary acting force for unfolding of a bent screen body, thereby ensuring the reliability of the screen body in a long-term use process.

### BRIEF DESCRIPTION OF DRAWINGS

FIG. 1 is a schematic structural diagram of a foldable electronic device in an unfolded state according to an embodiment of this application;
FIG. 2 is a schematic structural diagram of the foldable electronic device shown in FIG. 1 in a folded state;
FIG. 3 is a schematic structural diagram of the foldable electronic device shown in FIG. 1 in a semi-unfolded state;
FIG. 4 is a schematic exploded structural view of a foldable electronic device according to an embodiment of this application;
FIG. 5 is a schematic exploded structural view of a housing assembly shown in FIG. 4;
FIG. 6A is an exploded structural view of a rotating shaft mechanism shown in FIG. 5 in an unfolded state;
FIG. 6B is an exploded structural view of a rotating shaft mechanism shown in FIG. 5 in a folded state;
FIG. 7A is a schematic cross-sectional view of a foldable screen assembled on a rotating shaft mechanism in an unfolded state;
FIG. 7B is a schematic cross-sectional view of a foldable screen assembled on a rotating shaft mechanism in a folded state;
FIG. 8 is a schematic structural diagram of a support plate according to an embodiment of this application;
FIG. 9 is a schematic cross-sectional view of the support plate in FIG. 8;
FIG. 10 is a partial enlarged view of a position A in FIG. 8;
FIG. 11A is a front view of a rotating shaft body according to an embodiment of this application;
FIG. 11B is a rear view of a rotating shaft body according to an embodiment of this application;
FIG. 12 is a schematic exploded structural view of a rotating shaft body according to an embodiment of this application;
FIG. 13 is a partial enlarged view of a position B in FIG. 11A;
FIG. 14 is a partial enlarged view of a position C in FIG. 12;
FIG. 15A is a schematic cross-sectional view along A-A in FIG. 13;
FIG. 15B is a schematic cross-sectional view in a folded state corresponding to FIG. 15A;
FIG. 16A is a schematic cross-sectional view along B-B in FIG. 13;
FIG. 16B is a schematic cross-sectional view in a folded state corresponding to FIG. 16A;
FIG. 17A is a partial enlarged view at a position D in FIG. 11A;
FIG. 17B is a partial enlarged view at a position E in FIG. 11B;
FIG. 18A is a partial structural diagram of cooperation between a synchronous damping swing arm and a synchronous limiting structure;
FIG. 18B is a partial structural diagram of cooperation between a synchronous damping swing arm and a damping member;
FIG. 19 is a schematic structural diagram of a shaft cover according to an embodiment of this application; and
FIG. 20 is a partial cross-sectional view of a foldable screen and a support plate mounted on a shaft cover according to an embodiment of this application.

### DESCRIPTION OF EMBODIMENTS

Terms used in implementations of this application are merely intended to explain specific embodiments of this application rather than being intended to limit this application.

An embodiment of this application provides a foldable electronic device. The foldable electronic device includes but is not limited to a foldable electronic product such as a mobile phone, a tablet computer (tablet personal computer), a laptop computer (laptop computer), a notebook computer, a personal digital assistant (personal digital assistant, PDA), a personal computer, a multimedia player, an e-book reader, an in-vehicle device, or a wearable device. The wearable device includes but is not limited to a smart band, a smartwatch, a smart head-mounted display, smart glasses, or the like.

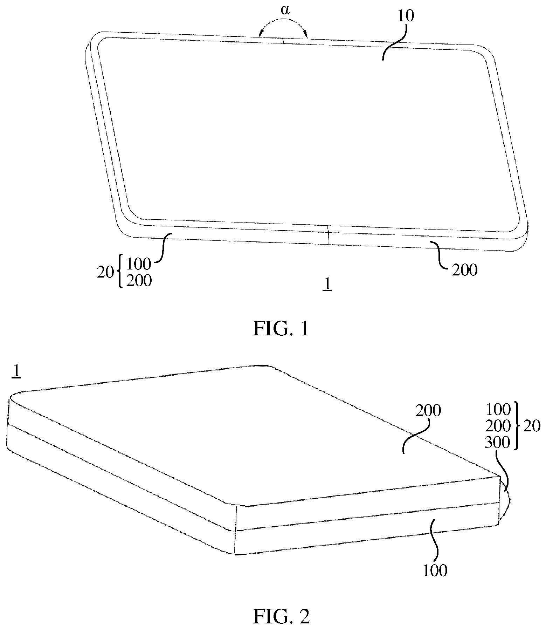

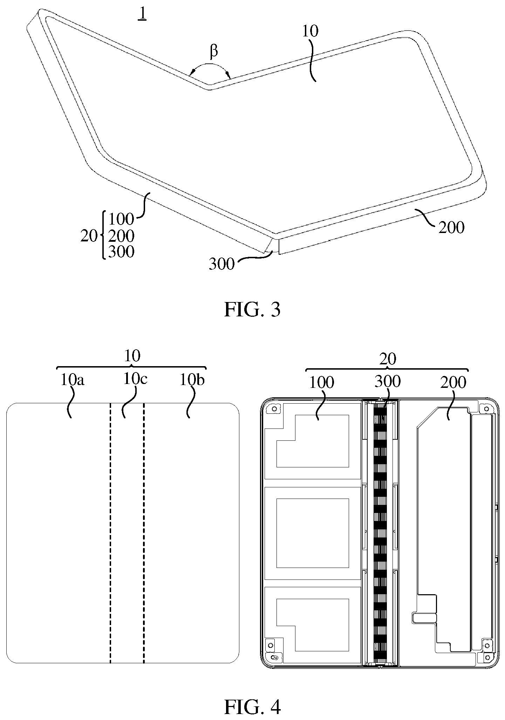

FIG. 1 is a schematic structural diagram of a foldable electronic device in an unfolded state according to an embodiment of this application; FIG. 2 is a schematic structural diagram of the foldable electronic device shown in FIG. 1 in a folded state; and FIG. 3 is a schematic structural diagram of the foldable electronic device shown in FIG. 1 in a semi-unfolded state. Referring to FIG. 1 to FIG. 3, description is provided by using an example in which the foldable electronic device 1 is a foldable mobile phone in this embodiment.

For the foldable electronic device 1, the foldable electronic device 1 may include different use states in different use scenarios. FIG. 1 shows the foldable electronic device 1 in an unfolded state, and an unfolding angle α of the foldable electronic device 1 is, for example, 180 degrees. In this case, the foldable electronic device 1 may implement large-screen display. FIG. 2 shows the foldable electronic device 1 in a folded state. In this case, the foldable electronic device 1 is small in size and is easy to carry. FIG. 3 shows the foldable electronic device 1 in a semi-unfolded state. In this case, the foldable electronic device 1 stays at an angle between the unfolded state and the folded state. For example, a staying angle β of the foldable electronic device 1 may be 120 degrees, 130 degrees, 140 degrees, or 150 degrees.

It should be noted that, a slight deviation is allowed for all angles described by using examples in this embodiment. For example, that the unfolding angle α of the foldable electronic device 11 shown in FIG. 1 is 180 degrees means that the unfolding angle may be 180 degrees, or may be approximately 180 degrees, for example, 170 degrees, 175 degrees, 185 degrees, or 190 degrees. An angle described by using an example in the following may be understood in the same way.

In addition, it should be understood that, the foldable electronic device 1 shown in FIG. 1 to FIG. 3 is an electronic device that may be folded once, and the electronic device includes two parts that can rotate relative to each other. When the two parts rotate to be coplanar, the foldable electronic device 1 is in the unfolded state (as shown in FIG. 1); when the two parts rotate to overlap with each other, the foldable electronic device 1 is in the folded state (as shown in FIG. 2); and when the two parts rotate to stay at an angle between the unfolded state and the folded state, the foldable electronic device 1 is in the semi-unfolded state (as shown in FIG. 3). In another implementation, the foldable electronic device 1 may alternatively be an electronic device that may be folded a plurality of times (twice or more times). In this case, the foldable electronic device 1 may include a plurality of parts rotatably connected to each other sequentially, where two adjacent parts may be away from each other to be unfolded to the unfolded state, or two adjacent parts may be close to each other to be folded to the folded state.

FIG. 4 is a schematic exploded structural view of a foldable electronic device according to an embodiment of this application. Referring to FIG. 4, the foldable electronic device 1 includes a foldable screen 10 and a housing assembly 20, where the foldable screen 10 is supported on and connected to a side surface of the housing assembly 20, a side surface of the foldable screen 10 facing away from the housing assembly 20 is a display surface of the foldable screen (not shown in the figure), and the display surface is configured to display information and provide an interaction interface for a user. In this embodiment, the display surface of the foldable screen 10 is defined as a front surface, and another side surface of the foldable screen 10 opposite to the front surface is defined as a back surface. That is, the front surface of the foldable screen 10 is exposed outside the housing assembly 20, and the back surface of the foldable screen 10 faces the housing assembly 20 and is connected to the housing assembly 20.

In this embodiment, the foldable screen 10 may be, but is not limited to, an organic light-emitting diode (organic light-emitting diode, OLED) display screen, an active-matrix organic light-emitting diode (active-matrix organic light-emitting diode, AMOLED) display screen, a mini light-emitting diode (mini organic light-emitting diode) display screen, a micro light-emitting diode (micro organic light-emitting diode) display screen, a micro organic light-emitting diode (micro organic light-emitting diode) display screen, a quantum dot light-emitting diode (quantum dot light emitting diodes, QLED) display screen, or the like.

The foldable screen 10 may include a first part 10a, a second part 10b, and a foldable part 10c, where the foldable part 10c is located between the first part 10a and the second part 10b. During use of the foldable electronic device 1, the first part 10a and the second part 10b always remain a plane state, and the foldable part 10c may be bent, to change an angle between the first part 10a and the second part 10b, so that the foldable screen 10 is folded or unfolded as the housing assembly 20 moves, thereby implementing switching of the foldable electronic device 1 between the folded state and the unfolded state. For example, in the foldable screen 10, at least the foldable part 10c is made of a flexible material, and the first part 10a and the second part 10b may be made of a flexible material or may be made of a rigid material, or may be partially made of a rigid material and partially made of a flexible material, which is not limited in this embodiment.

Under driving of the housing assembly 20, the foldable screen 10 can switch between an unfolded state and a folded state. As shown in FIG. 1 and FIG. 4, when the foldable screen 10 is in the unfolded state, the first part 10a and the second part 10b are in an unfolded state of being away from each other, and the foldable part 10c is in a flattened state without bending, where the first part 10a, the second part 10b, and the foldable part 10c have a same orientation and are in a coplanar state. in this case, the angle between the first part 10a and the second part 10b is 180 degrees, and the foldable screen 10 can implement large-screen display, which can provide more abundant information for the user and bring better use experience to the user.

As shown in FIG. 2 and FIG. 4, when the foldable screen 10 is in the folded state, the first part 10a and the second part 10b overlap with each other, and the foldable part 10c is in a bent state. For example, the foldable part 10c may be in a droplet shape. In this case, the foldable screen 10 is invisible to the user, and the housing assembly 20 protects the outside of the foldable screen 10, to prevent the foldable screen 10 from being scratched by hard objects. Such a foldable electronic device 1 is an inner foldable electronic device.

Certainly, in another example, the foldable electronic device 1 may alternatively be an outer foldable electronic device, and when the foldable electronic device is in the folded state, the first part 10a and the second part 10b of the foldable screen 10 are opposite to each other, the housing assembly 20 is located between the first part 10a and the second part 10b, and the foldable screen 10 is arranged around the outside of the housing assembly 20 and visible to the user. It may be understood that, no matter the foldable electronic device is an inner foldable electronic device or an outer foldable electronic device, when the foldable electronic device 1 is in the folded state, the foldable electronic device is small in size and is easy to carry and accommodate.

As shown in FIG. 3 and FIG. 4, the housing assembly 20 may further stay at a semi-unfolded state between the folded state and the unfolded state by using a damping force of the housing assembly, and the foldable screen 10 stays at the semi-unfolded state along with the housing assembly 20. In this case, the foldable part 10c of the foldable screen 10 is also in a bent state, and a bending degree is smaller than a bending degree in the folded state. The first part 10a and the second part 10b of the foldable screen 10 are inclined relative to each other, and the angle between the first part 10a and the second part 10b is, for example, 120 degrees, 130 degrees, 140 degrees, or 150 degrees.

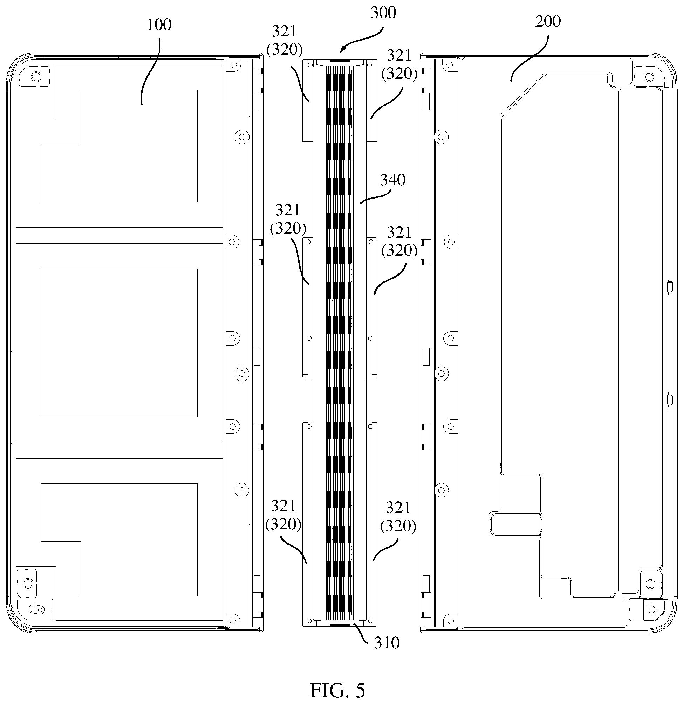

The housing assembly 20 is configured to support and fix the foldable screen 10, and drives the foldable screen 10 to switch between the folded state and the unfolded state. FIG. 5 is a schematic exploded structural view of a housing assembly shown in FIG. 4. Referring to FIG. 4 and FIG. 5, the housing assembly 20 includes a first housing 100, a second housing 200, and a rotating shaft mechanism 300, where the rotating shaft mechanism 300 is connected between the first housing 100 and the second housing 200, and the first housing 100 and the second housing 200 are rotatably connected through the rotating shaft mechanism 300, to implement relative rotation between the first housing 100 and the second housing 200.

The first housing 100 supports and fixes the first part 10a of the foldable screen 10, and the second housing 200 supports and fixes the second part 10b of the foldable screen 10. In other words, the first part 10a of the foldable screen 10 is fixedly connected to the first housing 100, the second part 10b of the foldable screen 10 is fixedly connected to the second housing 200, and the foldable part 10c of the foldable screen 10 is arranged corresponding to the rotating shaft mechanism 300. When the rotating shaft mechanism 300 drives the first housing 100 and the second housing 200 to rotate relative to each other, the first part 10a and the second part 10b of the foldable screen 10 change orientations accordingly, and the foldable part 10c of the foldable screen 10 is bent or unfolded along with state changes of the first part 10a and the second part 10b.

The rotating shaft mechanism 300 drives the first housing 100 and the second housing 200 to rotate relative to each other, so that the foldable electronic device 1 switches between the folded state and the unfolded state. The first housing 100 and the second housing 200 may alternatively rotate in a direction away from each other to be coplanar. In this case, the housing assembly 20 is in the unfolded state, and the foldable screen 10 is in the unfolded state along with unfolding of the housing assembly 20, as shown in FIG. 1. The first housing 100 and the second housing 200 may rotate in a direction close to each other to overlap with each other. In this case, the housing assembly 20 is in the folded state, and the foldable screen 10 is in the folded state along with folding of the housing assembly 20, as shown in FIG. 2. The first housing 100 and the second housing 200 may alternatively rotate relative to each other until the two housings stay between the folded state and the unfolded state. In this case, the housing assembly 20 is in the semi-unfolded state (stay state), an angle between the first housing 100 and the second housing 200 is, for example, 120 degrees, 130 degrees, 140 degrees, or 150 degrees, the foldable screen 10 is in the semi-unfolded state along with the housing assembly 20, and the angle between the first part 10a and the second part 10b of the foldable screen 10 is determined by the angle between the first housing 100 and the second housing 200.

For example, the first housing 100 may include a support surface facing the first part 10a of the foldable screen 10, and the first part 10a of the foldable screen 10 is attached to the support surface of the first housing 100. For example, the first part 10a of the foldable screen 10 is adhered to the support surface of the first housing 100. Similar, the second housing 200 may include a support surface facing the second part 10c of the foldable screen 10, and the second part 10b of the foldable screen 10 is attached to the support surface of the second housing 200. For example, the second part 10b of the foldable screen 10 is adhered to the support surface of the second housing 200.

In addition, the first housing 100 and the second housing 200 may each include an accommodating space, and the accommodating space is configured to mount some functional devices (not shown in the figure) of the foldable electronic device 1. For example, the accommodating space is configured to mount some devices such as a circuit board, a battery, a camera module, a microphone, or a speaker. For example, a circuit board may be arranged in both the first housing 100 and the second housing 200, and an electrical connection with other devices is implemented through the circuit boards in the two housings; a battery configured to supply power to the devices may be arranged in only the first housing 100 or the second housing 200, or the a battery may be arranged in both the first housing 100 and the second housing 200; and for other devices such as a camera module, a microphone, or a speaker, the devices may be arranged in the first housing 100 or the second housing 200 in a centralized manner, or some devices are arranged in the first housing 100 and some devices are arranged in the second housing 200.

The first housing 100 and the second housing 200 may each include a middle frame (not shown in the figure) and a rear cover (not shown in the figure), where the middle frame is connected between the foldable screen 10 and the rear cover, a side surface of the middle frame facing the foldable screen 10 forms the support surface, the side surface of the middle frame is configured to support and fix the foldable screen 10, the rear cover is connected to a side surface of the middle frame facing away from the foldable screen 10, and the middle frame and the rear cover jointly enclose to form the accommodating space for mounting devices.

In the related art, in the rotating shaft mechanism, a pressing plate is generally arranged on two sides of a shaft cover, the pressing plates on the two sides are respectively arranged corresponding to two sides of the foldable part 10c of the foldable screen 10, and the pressing plates on the two sides respectively face the two sides of the foldable part 10c and are fixedly connected to the foldable part 10c, so that the foldable part 10c of the foldable screen 10 is supported through the pressing plates and the folded state of the foldable part 10c is controlled to be in a droplet shape. In addition, in the rotating shaft mechanism, a floating plate is generally arranged on a side of the shaft cover facing the foldable screen 10, and the floating plate floats up and down as the rotating shaft mechanism is unfolded and folded, to support the foldable part 10c in different states (for example, a flattened state and a bent state).

However, arrangement of the pressing plates and the floating plate increases the complexity of the rotating shaft mechanism. As a result, it is difficult to manufacture and assemble components of the rotating shaft mechanism, and costs are high. In addition, the pressing plates limit the movement freedom of the foldable screen 10, a large gap generally exists between the pressing plates on the two sides, and a segment gap inevitably exists between the pressing plates and the floating plate, which affects the stability in supporting the foldable screen 10. In a long-term use process of the foldable electronic device 1, the foldable screen 10 is repeatedly folded and unfolded, which easily leads to a crease on the foldable screen 10. In addition, in a scenario in which the foldable electronic device 1 collides or falls off, in the foldable electronic device 1 in the folded state, a phenomenon of local stress concentration exists between the foldable part 10c of the foldable screen 10 and the floating plate, which increases a risk of failure of the foldable screen 10.

To improve the stability of the rotating shaft mechanism in supporting the foldable screen 10, in some scenarios, a protective sheet (for example, a steel sheet) is added between the foldable screen 10 and the pressing plates, so that the problem of an excessively large gap between the pressing plates is alleviated through the protective sheet, and the protective sheet may also overcome the segment gap between the pressing plates and the floating plate, to improve the flatness of the foldable screen 10. However, the protective sheet further increases the complexity of the rotating shaft mechanism, which is not conducive to manufacturing and assembly of the rotating shaft mechanism. In addition, the protective sheet also increases an entire thickness of the rotating shaft mechanism, which reduces the flexibility of the rotating shaft mechanism.

In view of this, the rotating shaft mechanism 300 configured to rotatably connect the first housing 100 and the second housing 200 is improved in the embodiments of this application. In the rotating shaft mechanism 300, the support plate that can generate elastic deformation is arranged on the side of the shaft cover 310 facing the foldable screen 10, the foldable part 10c of the foldable screen 10 is supported by the support plate, and the support plate may be bent or flattened along with the foldable part 10c, so that the support plate can provide a good support effect to the foldable part 10c. The pressing plate and the floating plate are replaced with the support plate, so that a structure of the rotating shaft mechanism 300 may be simplified, the rotating shaft mechanism 300 is easy to manufacture and assemble, and the production and assembly efficiency of the rotating shaft mechanism 300 may be improved. In addition, an integrated design of the support plate has good stability in supporting the foldable screen 10c of the foldable screen 10, thereby ensuring the flatness of the foldable screen 10. In the folded state, the support plate wraps the foldable screen 10c of the foldable screen 10, so that a phenomenon of local stress concentration on the foldable part 10c in scenarios such as collision or falling off may be prevented, and a risk of failure of the foldable screen 10 may be reduced.

The rotating shaft mechanism 300 in this embodiment is described in detail below.

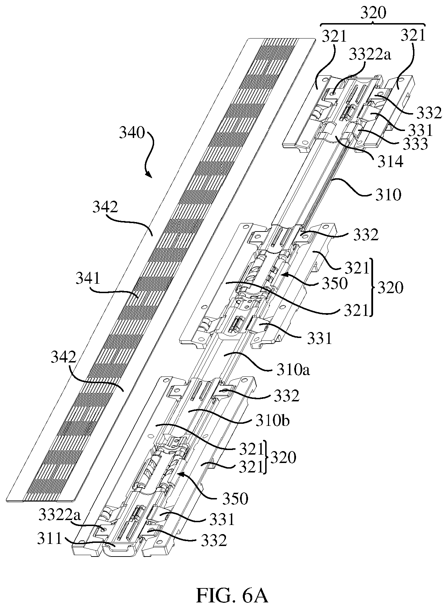

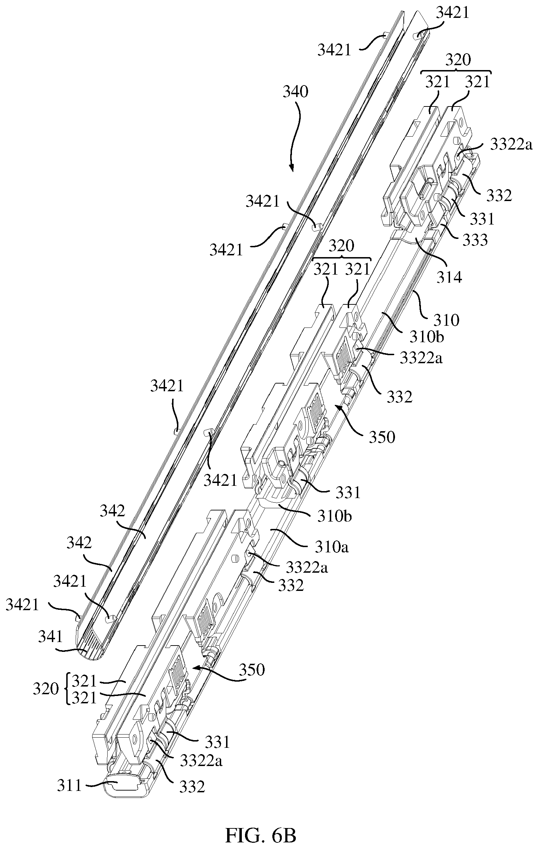

FIG. 6A is an exploded structural view of a rotating shaft mechanism shown in FIG. 5 in an unfolded state; and FIG. 6B is an exploded structural view of a rotating shaft mechanism shown in FIG. 5 in a folded state. Referring to FIG. 6A and FIG. 6B, the rotating shaft mechanism 300 includes a rotating shaft body and a support plate 340, where the rotating shaft body is connected between the first housing 100 and the second housing 200, and the support plate 340 is connected to a side of the rotating shaft body facing the foldable screen 10. The rotating shaft body is mainly configured to drive the first housing 100 and the second housing 200 to rotate relative to each other, to implement switching of the foldable electronic device 1 between the folded state and the unfolded state. In addition, the first housing 100 and the second housing 200 may stay at a semi-unfolded state through a damping force provided by the rotating shaft body. The support plate 340 is mainly configured to support the foldable part 10c of the foldable screen 10, and the support plate 340 is a plate-shaped member that can generate elastic deformation and can be bent or flattened synchronously along with the foldable part 10c of the foldable screen 10 under driving of the rotating shaft body.

The rotating shaft body includes a shaft cover 310, a connection frame group 320, and a connection assembly. The shaft cover 310 is a main body support structure of the rotating shaft body, the shaft cover 310 is located between the first housing 100 and the second housing 200, and the shaft cover 310 extends along a side edge of an opposite side of the first housing 100 and the second housing 200. In this case, the shaft cover 310 is equivalent to a rotating shaft of the first housing 100 and the second housing 200, and the first housing 100 and the second housing 200 rotate in a length direction of the shaft cover 310. The rotating shaft body is connected to the first housing 100 and the second housing 200 through the connection frame group 320, the connection assembly is movably connected between the connection frame group 320 and the shaft cover 310, and movement of the connection frame group 320 relative to the shaft cover 310 is implemented through the connection assembly, so that the rotating shaft body drives the first housing 100 and the second housing 200 to move relative to each other, to implement switching of the housing assembly 20 between the folded state and the unfolded state.

According to factors such as a size, performance, and the like of the foldable electronic device 1, the rotating shaft body may include one connection frame group 320 or at least two connection frame groups 320. For a case that the rotating shaft body is provided with at least two connection frame groups 320, the connection frame groups 320 may be spaced apart in the length direction of the shaft cover 310, the first housing 100 and the second housing 200 are connected to the shaft cover 310 through the connection frame groups 320, and different connection frame groups 320 correspond to different parts of the first housing 100 and the second housing 200, so that a firm connection between the rotating shaft mechanism 300 and the first housing 100 as well as the second housing 200 may be ensured, thereby ensuring the stability of the rotating shaft mechanism 300 in driving the first housing 100 and the second housing 200 to move.

An example in which three connection frame groups 320 are arranged at intervals in the length direction of the shaft cover 310 in FIG. 6A and FIG. 6B. Certainly, in other examples, two connection frame groups 320, four connection frame groups 320, five connection frame groups 320, or more connection frame groups 320 may alternatively be arranged at intervals in the length direction of the shaft cover 310, which is not specifically limited in the embodiments of this application.

Each connection frame group 320 includes two connection frames 321, the two connection frames 321 are respectively located on two sides of the shaft cover 310 in a width direction, and the two connection frames 321 are respectively fixedly connected to housings on corresponding sides. In other words, one connection frame 321 is located on a side on which the first housing 100 is located and is fixedly connected to the first housing 100, and the other connection frame 321 is located on a side on which the second housing 200 is located and is fixedly connected to the second housing 200. For example, the two connection frames 321 of each connection frame group 320 may be symmetrically arranged, and the connection frame 321 and the corresponding housing may be locked together through a locking member like a screw or a rivet.

Referring to FIG. 6A, the two connection frames 321 of the connection frame group 320 are unfolded on two sides of the shaft cover 310, and the two connection frames 321 and the shaft cover 310 are coplanar. In this case, the rotating shaft mechanism 300 is in the unfolded state, and the foldable electronic device 1 is in the unfolded state accordingly. Referring to FIG. 6B, the two connection frames 321 of the connection frame group 320 are close to each other and are folded on the shaft cover 310, and the two connection frames 321 are arranged approximately perpendicular to the shaft cover 310 and opposite to each other. In this case, the rotating shaft mechanism 300 is in the folded state, and the foldable electronic device 1 is in the folded state accordingly.

Still referring to FIG. 6A and FIG. 6B, the support plate 340 is located on the side of the shaft cover 310 facing the foldable screen 10, and the support plate 340 extends in the length direction of the shaft cover 310. That is, a length direction of the support plate 340 corresponds to the length direction of the shaft cover 310, the support plate 340 corresponds to the foldable part 10c of the foldable screen 10, the support plate 340 supports the foldable part 10c, and under driving of the rotating shaft body, the support plate 340 is flattened or bent synchronously along with the foldable part 10c of the foldable screen 10. FIG. 6A shows that the support plate 340 is in a flattened state when the rotating shaft body is in an unfolded state. In this case, the foldable part 10c of the foldable screen 10 is also in the flattened state, that is, the foldable screen 10 is in the unfolded state. FIG. 6B shows that the support plate 340 is in a bent state when the rotating shaft body is in a folded state. In this case, the foldable part 10c of the foldable screen 10 is also in the bent state, that is, the foldable screen 10 is in the folded state.

For positioning of the support plate 340, referring to FIG. 6A, a blocking edge 311 may be arranged at two ends of the shaft cover 310 in the length direction, the blocking edge 311 protrudes from a side surface of the shaft cover 310 facing the foldable screen 10, when the support plate 340 is mounted in the rotating shaft body, the support plate 340 is supported on the shaft cover 310 and the connection frames 321 located on the two sides of the shaft cover 310, and two ends of the support plate 340 in the length direction respectively abut against the blocking edges 311 at the corresponding ends of the shaft cover 310, to limit displacement of the support plate 340 in the length direction, so as to limit the support plate 340 within a length range of the shaft cover 310, prevent the support plate 340 from deviating from or falling off the two ends of the shaft cover 310, and preliminarily position the support plate 340.

In addition, on the basis that the support plate 340 is limited by the blocking edges 311 at the two ends of the shaft cover 310, a positioning structure is matched and arranged between the support plate 340 and the connection assembly, and the support plate 340 is engaged with and connected to the connection assembly through the positioning structure, to position the support plate 340 and limit displacement of the support plate 340 in the length direction and displacement of the support plate in a width direction. In a process that the support plate 340 is bent and flattened under driving of the rotating shaft body, so that the accuracy of a position of the support plate 340 is ensured, and the support plate 340 always directly faces the foldable part 10c of the foldable screen 10, thereby ensuring that the support plate 340 provides a good support and protection effect to the foldable part 10c.

It should be noted that, for the case that the support plate 340 is positioned through the connection assembly, the connection assembly drives the connection frame 321 to rotate and move relative to the shaft cover 310, the support plate 340 moves as the connection frame 321 rotates, the connection assembly is movably connected between the shaft cover 310 and the connection frame 321, and the connection assembly does not limit movement of the support plate 340, so that the support plate 340 can be stably unfolded or bent, and the stability of the support plate 340 is not affected.

As shown in FIG. 6A and FIG. 6B, as an example, the positioning structure matched and arranged between the support plate 340 and the connection assembly may include a positioning hole 3322a and a positioning column 3421. That is, one of the support plate 340 and the connection assembly is provided with the positioning hole 3322a, and the other is provided with the positioning column 3421 extending to the one. When the support plate 340 is engaged with and connected to the connection assembly, the positioning column 3421 is inserted into the positioning hole 3322a, and the support plate 340 is positioned through cooperation between the positioning column 3421 and the positioning hole 3322a. In the figures, an example in which the positioning column 3421 protrudes from a side surface of the support plate 340 facing the rotating shaft body and the positioning hole 3322a is provided on the connection assembly is used. Certainly, in other examples, the positioning hole 3322a may alternatively be provided on the support plate 340, and the positioning column 3421 is arranged on a side surface of the connection assembly facing the support plate 340. This is not limited in this embodiment.

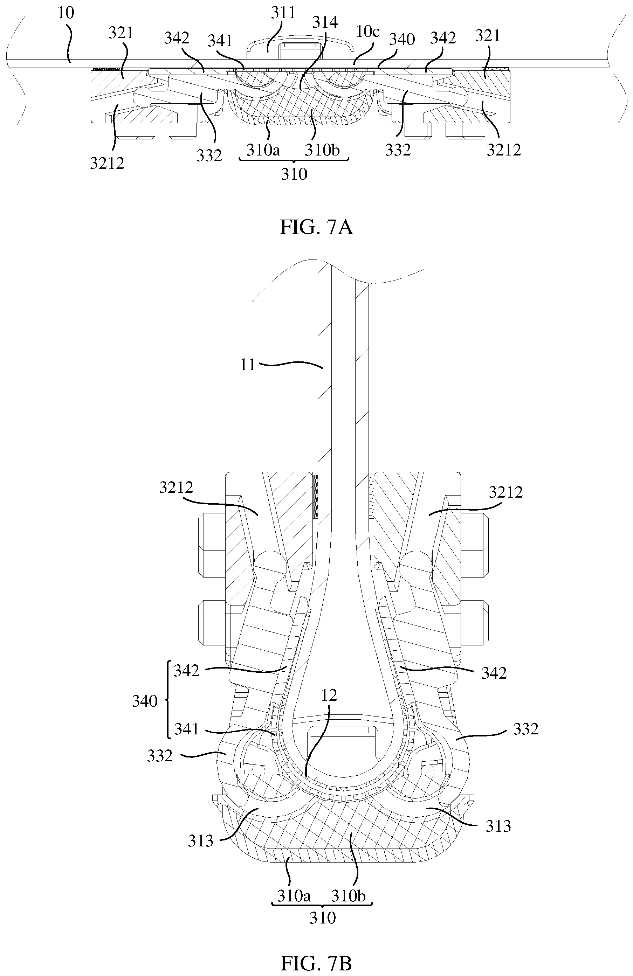

FIG. 7A is a schematic cross-sectional view of a foldable screen assembled on a rotating shaft mechanism in an unfolded state; and FIG. 7B is a schematic cross-sectional view of a foldable screen assembled on a rotating shaft mechanism in a folded state. Referring to FIG. 7A and FIG. 7B, two sides of the support plate 340 in the width direction extends out to a side of the shaft cover 310, and the support plate 340 is bridged on the connection frame 321. In this way, the support plate 340 may totally cover a region in which the foldable part 10c of the foldable screen 10 is located, and can provide a good support effect to the foldable part 10c. In addition, parts of the support plate 340 extending out to the outside of the shaft cover 310 may be connected to the connection assembly, to position the support plate 340.

Referring to FIG. 7A, when the rotating shaft mechanism 300 is in the unfolded state, that is, when the foldable electronic device 1 is in the unfolded state, the support plate 340 is in the flattened state along with unfolding of the rotating shaft body, the support plate 340 is supports below the foldable part 10c in the flattened state of the foldable screen 10, the foldable part 10c is flattened on the support plate 340, and the support plate 340 may provide a good support effect. The integrated support plate 340 can stably support the foldable part 10c of the foldable screen 10, and compared with a manner of jointly supporting the foldable part 10c through the pressing plate and the floating plate in the related art, the support plate 340 does not include a large gap and segment gap, so that the stability in supporting the foldable part 10c of the foldable screen 10 may be improved, and a risk of occurrence of a crease on the foldable screen 10 may be effectively reduced in a long-term use process of the foldable electronic device 1.

Referring to FIG. 7B, when the rotating shaft mechanism 300 is in the folded state, that is, when the foldable electronic device 1 is in the folded state, the support plate 340 is bent synchronously along with the foldable part 10c of the foldable screen 10, and the support plate 340 is wrapped on an outer side of the foldable part 10c. For the droplet-shaped foldable part 10c, the support plate 340 forms the droplet-shaped structure wrapped on the outer side of the foldable part 10c. In other words, the foldable part 10c and the support plate 340 jointly form a double droplet-shaped structure folded inside and outside. The support plate 340 totally wraps the foldable part 10c, so that a good protection effect is provided to the foldable part 10c. In risky scenarios such as collision or falling off, an acting force suffered by the foldable part 10c is uniformly dispersed and transmitted to various parts of the support plate 340, no part of the foldable part 10c locally suffers from an acting force, so that stress concentration does not occur on the foldable part 10c, a risk of failure of the foldable screen 10 is effectively reduced, and the reliability of the foldable screen 10 is improved.

The support plate 340 is positioned through the connection assembly and stably supports the foldable screen 10 (especially the foldable part 10c), and the connection assembly does not limit movement of the support plate 340, thereby ensuring that the support plate 340 can be flattened or bent synchronously along with the foldable screen 10 and provide a reliable support to the foldable screen 10. The support plate 340 is not connected to the foldable screen 10, so that the support plate 340 does not limit a movement space of the foldable screen 10. The foldable screen 10 in the folded state is used as an example, a protective gap exists between the support plate 340 and the foldable screen 10, and for example, the protective gap is 0.3 mm or greater than 0.3 mm. The foldable screen 10 has large movement freedom, so that a pit (convex hull) on the foldable screen 10 (especially the foldable part 10c) when being pulled in a folding process or in the unfolded state may be prevented, a service life of the foldable screen 10 is prolonged, and the flatness of the foldable screen 10 is improved.

In addition, referring to FIG. 7B, in some implementations, to increase a strength of the foldable screen 10, the foldable screen 10 may include a screen body 11 and a reinforcing sheet 12, where the reinforcing sheet 12 is connected to a side surface of the screen body 11 facing the rotating shaft mechanism 300, and the reinforcing sheet 12 is arranged corresponding to the foldable part 10c. In a long-term use process of the foldable screen 10, the foldable part 10c needs to be repeatedly bent and flattened, the reinforcing sheet 12 is added to a region in which the foldable part 10c is located, and the reinforcing sheet 12 may generate elastic deformation, to provide an auxiliary acting force for bending and flattening of the screen body 11, so as to increase a strength of the foldable part 10c, thereby ensuring the reliability of the foldable part 10c in the long-term use process.

For example, a positioning groove (not shown in the figure) may be provided in a region on the screen body 11 and corresponding to the foldable part 10c, a groove opening of the positioning groove faces the rotating shaft mechanism 300, the reinforcing sheet 12 may be attached in the positioning groove in a manner such as gluing, and for example, a groove depth of the positioning groove matches a thickness of the reinforcing sheet 12, so that a surface of the reinforcing sheet 12 is flush with a surface of another region of the screen body 11, and the flatness of the foldable screen 10 is improved. The reinforcing sheet 12 may be made of a metal sheet having good elasticity, and notches may be distributed on the metal sheet, to reduce the rigidity of the metal sheet and ensure that the metal sheet can be flattened and bent synchronously along with the screen body 11.

On the basis that the foldable screen 10 is provided with the reinforcing sheet 12, the foldable screen 10 is supported by the support plate 340, so that the stability and reliability of the foldable screen 10 may be further improved. Through the elasticity of the support plate 340, the support plate 340 can move synchronously along with the foldable screen 10, and while a support effect of the support plate 340 is ensured, the support plate 340 is wrapped on the foldable part 10c of the foldable screen 10 in the folded state, and through double effects of the reinforcing sheet 12 and the support plate 340, a droplet-shaped structure of the screen body 11 is maintained.

In this embodiment, the pressing plate and the floating plate in the related art are replaced with the support plate 340, so that a structure of the rotating shaft mechanism 300 is simplified, a quantity of components of the rotating shaft mechanism 300 is reduced, manufacturing costs of the rotating shaft mechanism 300 are reduced, and assembly of the rotating shaft mechanism 300 becomes more convenient. In addition, through the integrated support plate 340 that can be flattened or bent synchronously along with the foldable part 10c of the foldable screen 10, the reliability in supporting the foldable screen 10 is improved, the flatness of the foldable screen 10 is improved, a crease on the foldable screen 10 during long-term use can be alleviated or even eliminated, and a risk of failure of the foldable screen 10 is reduced.

In addition, the support plate 340 is a plate-shaped member having good elasticity and generally has a small thickness, compared with the pressing plate and the floating plate in the related art, by using the support plate 340, an entire thickness of the rotating shaft mechanism 300 is reduced, and the flexibility of the rotating shaft mechanism 300 is improved, meeting a lightening and thinning development trend of electronic devices.

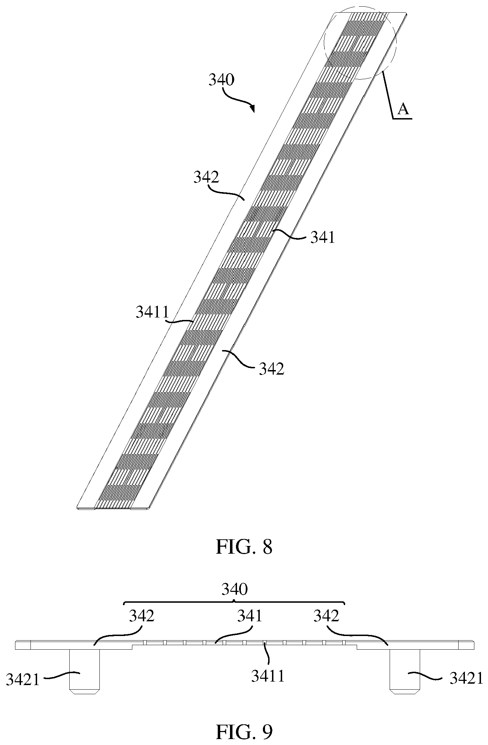

FIG. 8 is a schematic structural diagram of a support plate according to an embodiment of this application. Referring to FIG. 8, to ensure that the support plate 340 has good elastic performance and can be unfolded or bent along with the foldable part 10c of the foldable screen 10 under driving of the rotating shaft body, in an implementation, a middle region of the support plate 340 in the width direction may be set to a hollowed portion 341, and two sides of the hollowed portion 341 are physical portions 342. That is, a region on the support plate 340 corresponding to a bent top (with a largest bending and deformation degree) of the foldable part 10c is the hollowed portion 341, and a plurality of openings are uniformly distributed in the hollowed portion 341. In this way, the hollowed portion 341 may reduce the rigidity of the support plate 340 and improve the bendability performance of the support plate 340, and the physical portions 342 on the two sides may further ensure a sufficient strength of the support plate 340, so that the support plate 340 stably moves synchronously along with the foldable part 10c of the foldable screen 10, thereby ensuring that the support plate 340 can be bent and wrapped on the outside of the foldable screen 10 in the folded state and the support plate 340 can be smoothly restored to a natural state and stably support the foldable screen 10 in the unfolded state.

The hollowed portion 341 may cover an entire region of the support plate 340 in the length direction, so that the entire region of the support plate 340 in the length direction has consistent bending performance, thereby ensuring the shape consistency of the support plate 340 in the bent state, and ensuring the stability of the support plate 340 in supporting the foldable screen 10. In addition, a case that a local region of the support plate 340 squeezes the foldable screen 10 or a large gap exists between the support plate and the foldable screen 10 since the support plate 340 is uneven in the bent state is avoided, and local deformation or even failure of the foldable screen 10 caused by the case is avoided.

FIG. 9 is a schematic cross-sectional view of the support plate in FIG. 8. As shown in FIG. 6B and FIG. 9, an example in which the positioning column 3421 is arranged on the support plate 340 is used, and the positioning column 3421 may be located on the physical portions 342 on the two sides of the hollowed portion 341 on the support plate 340. On one hand, the hollowed portion 341 corresponds to the shaft cover 310, the physical portions 342 on the two sides of the hollowed portion 341 extends out to the two sides of the shaft cover 310 and respectively corresponding to the connection assemblies on the two sides, and the positioning column 3421 is arranged on the physical portion 342, so that the positioning column 3421 is engaged with and inserted into the positioning hole 3322a on the connection assembly. On the other hand, the physical portions 342 on the two sides of the hollowed portion 341 each have a complete plate surface for ease of arrangement of the positioning column 3421, thereby ensuring that the positioning column 3421 has a sufficient cross-sectional area (diameter) and ensuring the reliability of positioning the support plate 340 through the connection assembly.

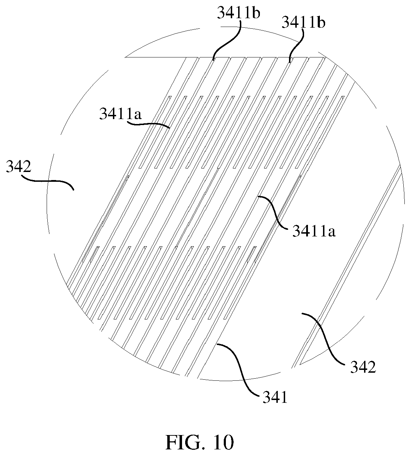

FIG. 10 is a partial enlarged view of A in FIG. 8. As shown in FIG. 8 and FIG. 10, the openings distributed in the hollowed portion 341 may be strip-shaped openings 3411, and the strip-shaped openings 3411 extend in the length direction of the support plate 340. In other words, a plurality of strip-shaped openings 3411 extending in the length direction of the support plate are provided on the support plate 340, and the strip-shaped openings 3411 are distributed in the middle region of the support plate 340 in the width direction to form the hollowed portion 341. The strip-shaped opening 3411 is a narrow opening and can select a direction for changing the bending performance of the support plate 340, and the strip-shaped opening 3411 extends in the length direction of the support plate 340, so that the strip-shaped opening 3411 has a sufficient opening area, and the support plate 340 can be easily bent in the length direction, meeting a folding manner of the rotating shaft mechanism 300. In addition, influence on a strength of the support plate 340 in the width direction is small, so that the support plate 340 is not easily bent in the width direction, thereby ensuring the reliability of the support plate 340 in supporting the foldable screen 10.

Referring to FIG. 10, for the strip-shaped openings 3411 arranged at intervals in the width direction of the support plate 340, and adjacent strip-shaped openings 3411 may be provided in a front-back staggered manner. That is, adjacent strip-shaped openings 3411 are provided in a staggered manner in the length direction of the support plate 340. In this way, the strip-shaped openings 3411 are distributed in the hollowed portion 341 more uniformly, so that a case that a density of the strip-shaped openings 3411 in the hollowed portion 341 is non-uniform, some regions have an excessively large opening area, and some other regions have an excessively small opening area and even do not have an opening is avoided, thereby ensuring good bending performance of the support plate 340. In addition, an excessively large strength different between different regions of the support plate 340 may be prevented, and the reliability of the support plate 340 is not affected.

For example, for the strip-shaped openings 3411 distributed in a front-back staggered manner in the length direction of the support plate 340, the strip-shaped openings 3411 may include a first strip-shaped opening 3411a and a second strip-shaped opening 3411b. The first strip-shaped opening 3411a may be a closed opening totally located between two ends of the support plate 340 in the length direction. In other words, the first strip-shaped opening 3411a is a closed strip-shaped hole. The second strip-shaped opening 3411b may also extend to an end portion of the support plate 340 in the length direction, the second strip-shaped opening 3411b is in communication with an end surface of the support plate 340, and the second strip-shaped opening 3411b is an open structure.

The first strip-shaped opening 3411a is provided in the region between the two ends of the support plate 340 in the length direction, so that the bendability performance of the entire support plate 340 is ensured. Based on this, the second strip-shaped opening 3411b in communication with the end surface of the support plate 340 is provided, so that a disconnection region between the two ends of the support plate 340 in the length direction is also ensured, thereby ensuring that the two ends of the support plate 340 have good bendability performance. Therefore, the consistency of the bendability performance of the support plate 340 in the length direction is ensured, and the reliability of synchronous bending of the support plate 340 along with the foldable screen 10 is ensured.

In addition, in the width direction of the support plate 340, every two adjacent strip-shaped openings 3411 are provided in a front-back staggered manner in the length direction of the support plate 340, and the strip-shaped openings 3411 are provided in a regular staggered manner as a whole. An overlapping region may exist between adjacent strip-shaped openings 3411 in the length direction of the support plate 340. In other words, end portion regions close to each other of the adjacent strip-shaped openings 3411 overlap with each other and are located in the same length range. In this way, a phenomenon that the support plate 340 has no opening in one or several length ranges may be avoided, ensuring that regions within a length range of the support plate 340 all have good bending performance, so that the support plate 340 can be stably bent or flattened under driving of the rotating shaft body.

For example, the support plate 340 may be a metal plate. For example, the support plate 340 is made of an alloy material such as titanium alloy, aluminum alloy, or copper alloy, and the support plate 340 of a metal material has a sufficient strength, meeting a use requirement of the support plate 340. The hollowed portion 341 is arranged in the middle region of the metal plate in the width direction, and openings (for example, the strip-shaped openings 3411 described above) may be provided in the hollowed portion 341, to ensure that the metal plate has bending requirement meeting a requirement.

In other examples, the support plate 340 may alternatively be made of another material having good elastic performance. For example, the support plate 340 is made of a high-elastic polymer material, composite material, or carbon fiber material, and according to an elastic deformation capability of the material forming the support plate 340, openings may be provided in the middle region of the support plate 340 in the width direction to form the hollowed portion 341, or the support plate 340 may be a complete plate-shaped member without openings, which is not specifically limited in this embodiment.

The rotating shaft body in the rotating shaft mechanism 300 is described in detail below.

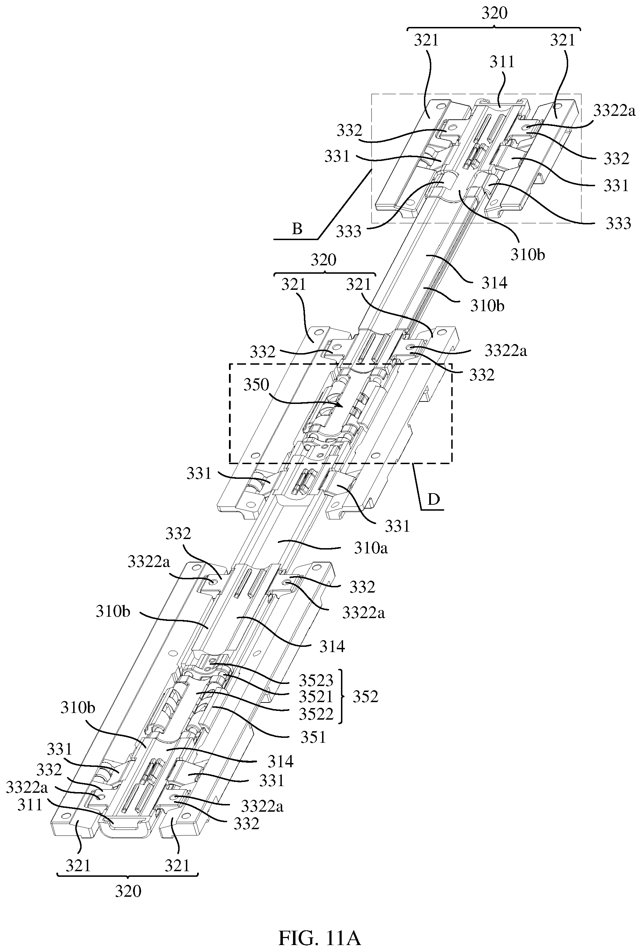

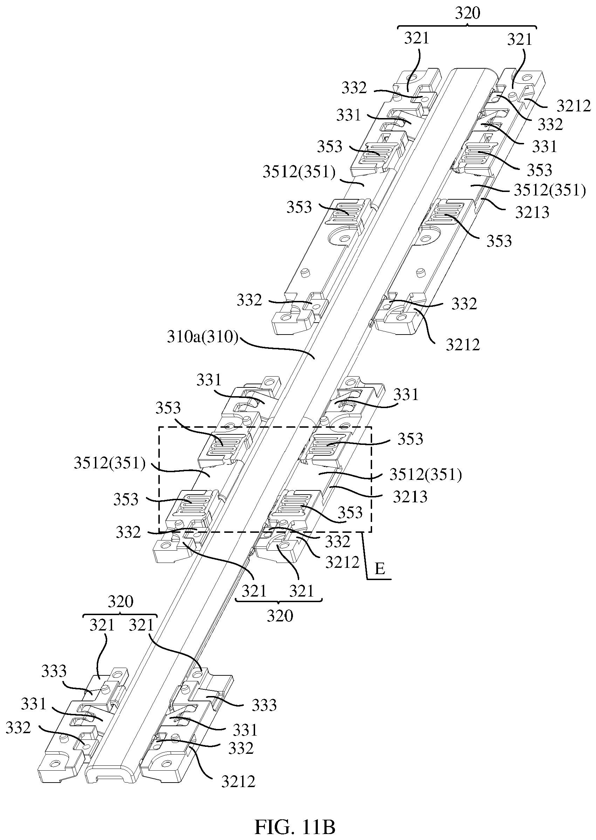

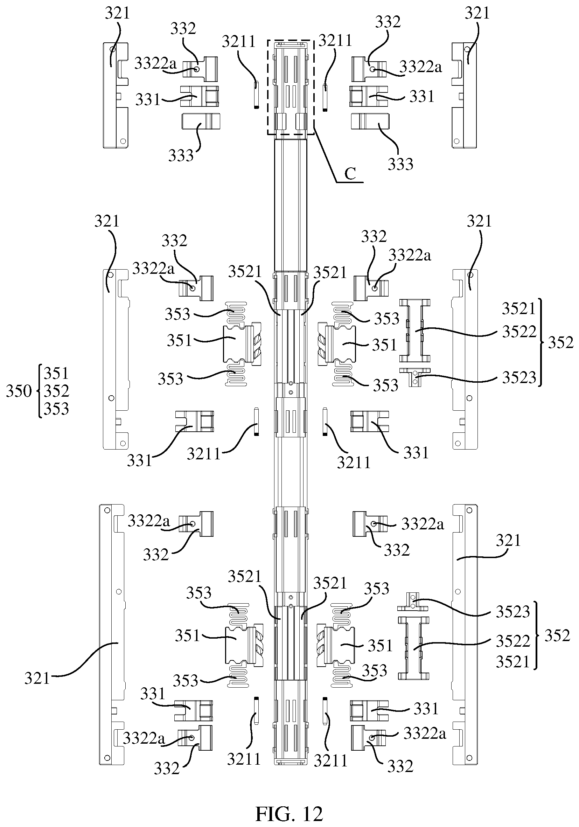

FIG. 11A is a front view of a rotating shaft body according to an embodiment of this application; FIG. 11B is a rear view of a rotating shaft body according to an embodiment of this application; and FIG. 12 is a schematic exploded structural view of a rotating shaft body according to an embodiment of this application.

Referring to FIG. 11A and FIG. 11B, in the rotating shaft body, the connection frame 321 is connected to the shaft cover 310 through the connection assembly, and the connection assembly may be rotatably and slidably connected between the shaft cover 310 and the connection frame 321, to implement rotation and displacement (getting away from or getting close to) of the connection frame 321 relative to the shaft cover 310. An example in which the rotating shaft body shown in the figures is provided with three connection frame groups 320 is used. For a case that the rotating shaft body is provided with at least two connection frame groups 320, extending lengths of connection frames 321 of different connection frame groups 320 may be different, a connection assembly may be movably connected between the connection frame 321 of each connection frame group 320 and the rotating shaft body, and another assembly, for example, a synchronous damping assembly 350 mentioned below, may be further connected between the connection frame 321 of at least some connection frame groups 320 and the rotating shaft body.

Referring to FIG. 11A, a mounting structure configured to connect to or mount components such as the connection assembly and the synchronous damping assembly 350 on the shaft cover 310 may be arranged on a side surface of the shaft cover 310 facing the foldable screen 10, and the support plate 340 and the foldable screen 10 cover the side surface of the shaft cover 310, so that the mounting structure on the shaft cover 310 may be blocked. Referring to FIG. 11B, a side surface of the shaft cover 310 facing away from the foldable screen 10 is a smooth and flat surface, and for an inner foldable electronic device, the side surface of the shaft cover 310 may be exposed to the outside when the foldable electronic device 1 is in the folded state or all the time. In this way, the connection assembly, a synchronous damping swing arm 351, and the mounting structure arranged on the shaft cover 310 may be protected, and this is conducive to improving an appearance effect of the foldable electronic device 1.

It should be noted that, referring to FIG. 11A to FIG. 12, a case that connection assemblies, synchronous damping assemblies 350, and the like that are arranged corresponding to the connection frames 321 arranged on the two sides of the shaft cover 310 are all symmetrically arranged. In other examples, the connection assemblies, the synchronous damping assemblies 350, and the like respectively connected to the connection frames 321 on the two sides may alternatively be of an asymmetric structure. In addition, according to design requirements for positions and lengths of the connection frames 321, there may be different manners for setting quantities and positions of the components such as the connection assemblies and the synchronous damping assemblies 350 connected between different connection frames 321 and the shaft cover 310, which is not specifically limited in this embodiment.

Referring to FIG. 12, the connection assembly connected between the shaft cover 310 and the connection frame 321 includes a main swing arm 331. The main swing arm 331 serves as a main transmission component between the shaft cover 310 and the connection frame 321, and through a transmission effect of the main swing arm 331, rotation and displacement (getting away from or getting close to) of the connection frame 321 relative to the shaft cover 310 may be implemented, thereby implementing switching of the housing assembly 20 between the unfolded state and the folded state.

Using an inner foldable electronic device as an example, in a process that the foldable electronic device 1 switches from the unfolded state to the folded state, the main swing arm 331 drives the connection frame 321 to rotate to a side facing the foldable screen 10 relative to the shaft cover 310, so that the connection frames 321 on the two sides of the shaft cover 310 get close to each other to be arranged opposite to each other. In addition, the main swing arm 331 drives the connection frame 321 to move to a direction away from the shaft cover 310, to increase a gap between the connection frame 321 and the shaft cover 310, so that the first housing 100 and the second housing 200 located on the two sides of the shaft cover 310 smoothly switch to an overlapping state through movement of the connection frame 321. In a process that the foldable electronic device 1 switches from the folded state to the unfolded state, the main swing arm 331 drives the connection frame 321 to rotate to a side facing away from the foldable screen 10 relative to the shaft cover 310, so that the connection frames 321 on the two sides of the shaft cover 310 are away from each other to be arranged in a coplanar manner. In addition, the main swing arm 331 drives the connection frame 321 to move in a direction close to the shaft cover 310, to decrease the gap between the connection frame 321 and the shaft cover 310, so that the first housing 100 and the second housing 200 located on the two sides of the shaft cover 310 smoothly switch to a coplanar state through movement of the connection frame 321, and the connection frame 321 may abut against the shaft cover 310 to keep the stability of the housing assembly 20 in the unfolded state.

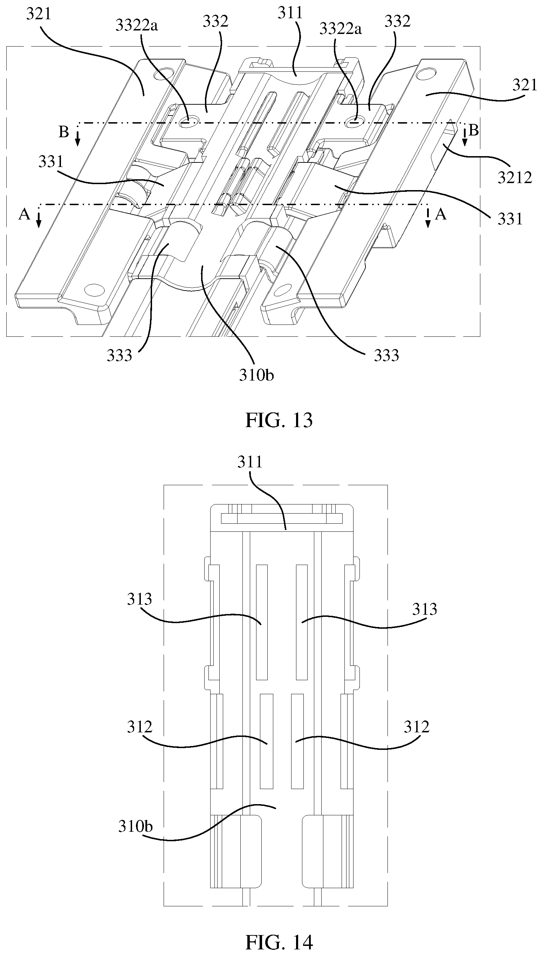

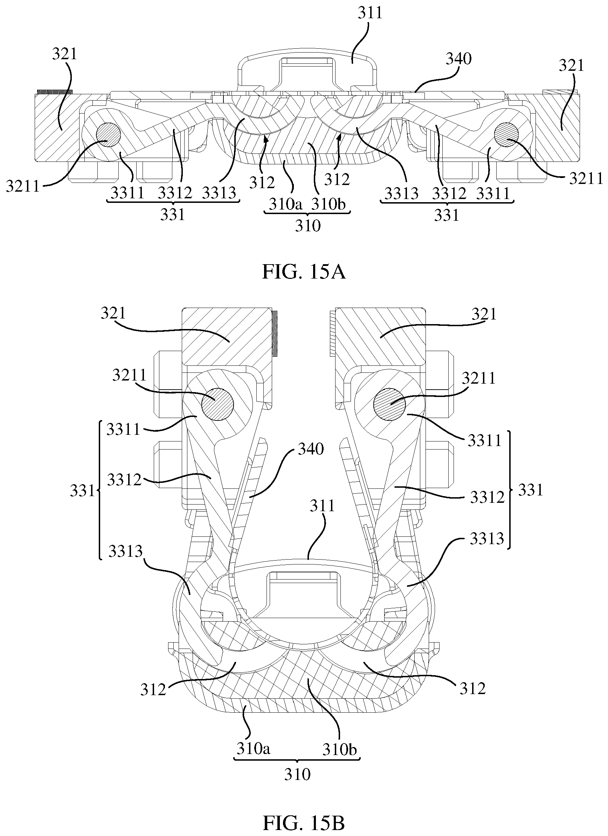

FIG. 13 is a partial enlarged view of a position B in FIG. 11A; FIG. 14 is a partial enlarged view of a position C in FIG. 12; FIG. 15A is a schematic cross-sectional view along A-A in FIG. 13; and FIG. 15B is a schematic cross-sectional view in a folded state corresponding to FIG. 15A. Referring to FIG. 13, in an example, a first end of the main swing arm 331 is rotatably connected to the connection frame 321, and a second end of the main swing arm 331 is slidably and rotatably connected to the shaft cover 310. The connection frame 321 rotates around the first end of the main swing arm 331, and the second end of the main swing arm 331 rotates around the shaft cover 310, so that the connection frame 321 rotates relative to the shaft cover 310. The second end of the main swing arm 331 slides relative to the shaft cover 310, so that the connection frame 321 gets away from or gets close to the shaft cover 310, the gap between the connection frame 321 and the shaft cover 310 is changed, and the housing assembly 20 smoothly switches between the unfolded state and the folded state.

The second end of the main swing arm 331 is slidably and rotatably connected to the shaft cover 310, so that the connection frame 321 can rotate relative to the shaft cover 310, and the connection frame 321 moves close to or away from the shaft cover 310. In other examples, the first end of the main swing arm 331 may alternatively be fixedly connected to the connection frame 321. For example, the main swing arm 331 may be connected to the connection frame 321 through welding, adhering, or a locking member such as a screw or a rivet, which is not limited in this embodiment.

Referring to FIG. 14, an example in which the first end of the main swing arm 331 is rotatably connected to the connection frame 321 and the second end of the main swing arm 331 is slidably and rotatably connected to the shaft cover 310 is used, a first arc-shaped groove 312 may be provided on the shaft cover 310. Referring to FIG. 15A or FIG. 15B, a first rotating shaft 3211 may be mounted on the connection frame 321, and the main swing arm 331 may include a rotating portion 3311, a connection plate portion 3312, and a first arc-shaped sliding portion 3313 sequentially from the first end to the second end. The rotating portion 3311 of the main swing arm 331 is sleeved on the first rotating shaft 3211 of the connection frame 321, the main swing arm 331 rotates around the first rotating shaft 3211 through the rotating portion 3311, and the first arc-shaped sliding portion 3313 of the main swing arm 331 extends into the first arc-shaped groove 312. In a process that the first arc-shaped sliding portion 3313 slides in the first arc-shaped groove 312, the connection frame 321 may rotate around the shaft cover 310 and the connection frame 321 may get away from or get close to the shaft cover 310 simultaneously, and the connection plate portion 3312 of the main swing arm 331 is located between the rotating portion 3311 and the first arc-shaped sliding portion 3313, to provide a certain torque between the rotating portion 3311 and the first arc-shaped sliding portion 3313.

Referring to FIG. 15A, when the rotating shaft body is in the unfolded state, an extending amount of the first arc-shaped sliding portion 3313 of the main swing arm 331 into the first arc-shaped groove 312 on the shaft cover 310 is maximized, and the first arc-shaped sliding portions 3313 of the main swing arms 331 on the two sides of the shaft cover 310 are in a state of being close to each other. In this case, the connection frames 321 on the two sides of the shaft cover 310 may be, for example, tightly attached to side walls of the two sides of the shaft cover 310, to ensure the stability of the foldable electronic device 1 in the unfolded state. Referring to FIG. 15B, when the rotating shaft body is in the folded state, an extending amount of the first arc-shaped sliding portion 3313 of the main swing arm 331 into the first arc-shaped groove 312 is minimized, and the first arc-shaped sliding portions 3313 of the main swing arms 331 on the two sides of the shaft cover 310 are in a state of being away from each other. In this case, a certain gap may exist between the connection frames 321 on the two sides of the shaft cover 310 and the shaft cover 310, to ensure that the foldable electronic device 1 can be smoothly folded.

In a process that the rotating shaft body switches from the unfolded state to the folded state, the rotating portion 3311 of the main swing arm 331 rotates around the first rotating shaft 3211 of the connection frame 321, and the first arc-shaped sliding portion 3313 of the main swing arm 331 slides along the first arc-shaped groove 312 in a direction exiting the first arc-shaped groove 312, so that the connection frames 321 on the two sides of the shaft cover 310 gradually rotate in a direction of getting close to each other to be opposite to each other. In addition, the gap between the connection frame 321 and the shaft cover 310 gradually increases, thereby implementing folding of the housing assembly 20. On the contrary, in a process that the rotating shaft body switches from the folded state to the unfolded state, the rotating portion 3311 of the main swing arm 331 rotates around the first rotating shaft 3211 of the connection frame 321, and the first arc-shaped sliding portion 3313 of the main swing arm 331 slides along the first arc-shaped groove 312 in a direction extending into the first arc-shaped groove 312, so that the connection frames 321 on the two sides of the shaft cover 310 gradually rotate in a direction of getting away from each other to be coplanar with the shaft cover 310. In addition, the gap between the connection frame 321 and the shaft cover 310 gradually decreases, thereby implementing unfolding of the housing assembly 20.

Still referring to FIG. 12, the connection assembly connected between the shaft cover 310 and the connection frame 321 further includes a support plate swing arm 332, where the support plate swing arm 332 cooperates with the main swing arm 331 to implement a transmission effect between the shaft cover 310 and the connection frame 321, thereby improving the stability of movement of the connection frame 321 relative to the shaft cover 310. In addition, the support plate swing arm 332 further serves as a mounting foundation for the foregoing support plate 340, and the support plate 340 may be positioned through the support plate swing arm 332. As a transmission member between the connection frame 321 and the shaft cover 310, similar to the main swing arm 331, the support plate swing arm 332 may drive the connection frame 321 to rotate relative to the shaft cover 310. In addition, the support plate swing arm 332 may drive the connection frame 321 to get away from or get close to the shaft cover 310, to change the gap between the connection frame 321 and the shaft cover 310. Details are not described herein.

As the mounting foundation of the support plate 340, to prevent the support plate swing arm 332 from limiting movement of the support plate 340, referring to FIG. 13, in some implementations, a first end of the support plate swing arm 332 may be slidably connected to the connection frame 321, and a second end of the support plate swing arm 332 may be slidably and rotatably connected to the shaft cover 310. Therefore, the support plate swing arm 332 has sufficient freedom between the connection frame 321 and the shaft cover 310, and the support plate swing arm 332 can adjust a movement state in cooperation with movement of the support plate 340.

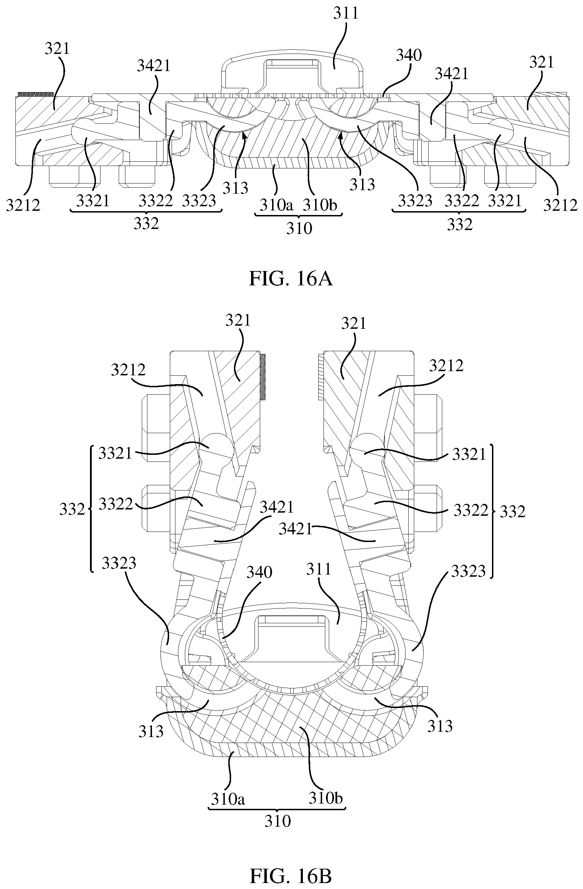

FIG. 16A is a schematic cross-sectional view along B-B in FIG. 13; and FIG. 16B is a schematic cross-sectional view in a folded state corresponding to FIG. 16A. Referring to FIG. 14, in an example, a second arc-shaped groove 313 may be provided on the shaft cover 310. Referring to FIG. 16A or FIG. 16B, a first sliding groove 3212 may be provided on the connection frame 321, and the support plate swing arm 332 may include a sliding shaft portion 3321, a connection portion 3322, and a second arc-shaped sliding portion 3323 sequentially from the first end to the second end. The sliding shaft portion 3321 of the support plate swing arm 332 extends into the first sliding groove 3212, and the sliding shaft portion 3321 may move along the first sliding groove 3212. In addition, the sliding shaft portion 3321 may rotate around an axis of the sliding shaft portion in the first sliding groove 3212, and the second arc-shaped sliding portion 3323 of the support plate swing arm 332 extends into the second arc-shaped groove 313. In a process that the second arc-shaped sliding portion 3323 slides in the second arc-shaped groove 313, the connection frame 321 may rotate around the shaft cover 310 and the connection frame 321 may get away from or get close to the shaft cover 310 simultaneously, and the connection portion 3322 of the support plate swing arm 332 is located between the sliding shaft portion 3321 and the second arc-shaped sliding portion 3323, to provide a certain torque between the sliding shaft portion 3321 and the second arc-shaped sliding portion 3323.

Similar to the main swing arm 331, referring to FIG. 16A, when the rotating shaft body is in the unfolded state, an extending amount of the second arc-shaped sliding portion 3323 of the support plate swing arm 332 into the second arc-shaped groove 313 on the shaft cover 310 is maximized, and the second arc-shaped sliding portions 3323 of the support plate swing arms 332 on the two sides of the shaft cover 310 are in a state of being close to each other. Referring to FIG. 16B, when the rotating shaft body is in the folded state, an extending amount of the second arc-shaped sliding portion 3323 of the support plate swing arm 332 into the second arc-shaped groove 313 is minimized, and the second arc-shaped sliding portions 3323 of the support plate swing arms 332 on the two sides of the shaft cover 310 are in a state of being away from each other.

In a process that the rotating shaft body switches between the unfolded state and the folded state, as the support plate 340 moves, the sliding shaft portion 3321 of the support plate swing arm 332 slides and rotates in the first sliding groove 3212 of the connection frame 321, and a sliding process of the second arc-shaped sliding portion 3323 of the support plate swing arm 332 in the second arc-shaped groove 313 is similar to a sliding process of the first arc-shaped sliding portion 3313 of the main swing arm 331 in the first arc-shaped groove 312. Details are not described herein. In addition, referring to FIG. 16A or FIG. 16B, an example in which the support plate 340 is engaged with and connected to the connection assembly through the foregoing positioning structure is used, the positioning column 3421 is arranged on the physical portions 342 on the two sides of the support plate 340, and correspondingly, the positioning hole 3322a may be provided on the support plate swing arm 332. For example, the positioning hole 3322a may be provided on the connection portion 3322 of the support plate swing arm 332, and the positioning column 3421 on the support plate 340 is inserted into the positioning hole 3322a on the support plate swing arm 332, to implement positioning of the support plate 340 through the support plate swing arm 332. Under driving of the support plate swing arm 332, the support plate 340 is flattened or bent accordingly.

It should be noted that, in this embodiment, description is provided by using an example in which the support plate swing arm 332 is slidably and rotatably connected to the connection frame 321, and the sliding shaft portion 3321 of the support plate swing arm 332 may also rotate around an axis of the sliding shaft portion in a process of sliding along the first sliding groove 3212. In other examples, the support plate swing arm 332 may alternatively be slidably connected to the connection frame 321. In other words, a part of the support plate swing arm 332 extending into the first sliding groove 3212 of the connection frame 321 only slides along the first sliding groove 3212 and does not slide around an axis of itself, and when the second arc-shaped sliding portion 3323 of the support plate swing arm 332 rotates around the shaft cover 310, rotation of the entire support plate swing arm 332 may be implemented. In addition, the support plate swing arm 332 is slidably connected to the shaft cover 310, and the support plate swing arm 332 is also slidably connected to the connection frame 321, so that the support plate swing arm 332 has sufficient freedom, can implement rotation and displacement of the connection frame 321 relative to the shaft cover 310, and can also drive the support plate 340 to move smoothly.

In addition, in another embodiment, on the basis that the support plate swing arm 332 can flatten the support plate 340 or wrap the foldable part 10c of the foldable screen 10, it may be that the first end of the support plate swing arm 332 is rotatably connected to the connection frame 321 and the second end is slidably and rotatably connected to the shaft cover 310, or the first end of the support plate swing arm 321 is slidably and rotatably connected to the connection frame 321 and the second end is slidably connected to the shaft cover 310, or the first end of the support plate swing arm 321 is rotatably connected to the connection frame 321 and the second end is slidably connected to the shaft cover 310.

Referring to FIG. 12, in addition to the main swing arm 331 and the support plate swing arm 332, an auxiliary swing arm 333 is further connected between the connection frame 321 of the at least one connection frame group 320 and the shaft cover 310. Through joint action of the auxiliary swing arm 333 and the main swing arm 331, the stability of connection between the connection frame 321 and the shaft cover 310 may be improved, thereby improving the stability of movement of the connection frame 321 relative to the shaft cover 310. In the figure, the auxiliary swing arm 333 is connected between the connection frame 321 of one connection frame group 320 among three connection frame groups 320 and the shaft cover 310. Certainly, in other examples, in a case that space is sufficient, the auxiliary swing arm 333 may also be connected between the connection frame 321 of another connection frame group 320 and the shaft cover 310, which is not limited in this embodiment. Opposite to the main swing arm 331, a first end of the auxiliary swing arm 333 is slidably and rotatably connected to the connection frame 321, and a second end of the auxiliary swing arm 333 is rotatably connected to the shaft cover 310.

As described above, the synchronous damping assembly 350 is further connected between the connection frame 321 of at least some connection frame groups 320 and the shaft cover 310. Referring to FIG. 11A to FIG. 12, in the figures, the synchronous damping assembly 350 is connected between the connection frame 321 of two connection frame groups 320 among the three connection frame groups 320 and the shaft cover 310. Certainly, in other examples, the synchronous damping assembly 350 may alternatively be connected between the connection frame 321 of only one connection frame group 320 among the three connection frame groups 320 and the shaft cover 310, or the synchronous damping assembly 350 is connected between the connection frame 321 of the three connection frame groups 320 and the shaft cover 310.

The synchronous damping assembly 350 is configured to implement synchronous movement of two connection frames 321 located on two sides of the shaft cover 310 in the connection frame group 320, to case the connection frames 321 on two sides of the shaft cover 310 to respectively drive the first housing 100 and the second housing 200 to move synchronously, thereby ensuring the accuracy of movement of the housing assembly 20, and ensuring smooth and accurate switching of the foldable electronic device 1 between the unfolded state and the folded state. In addition, the synchronous damping assembly 350 is further configured to generate a damping force in a process that the connection frame 321 moves relative to the shaft cover 310, and the damping force may help the connection frame 321 to drive the first housing 100 and the second housing 200 to stay at an angle between the unfolded state and the folded state. In other words, the damping force can cause the foldable electronic device 1 to stay at the semi-unfolded state shown in FIG. 3.

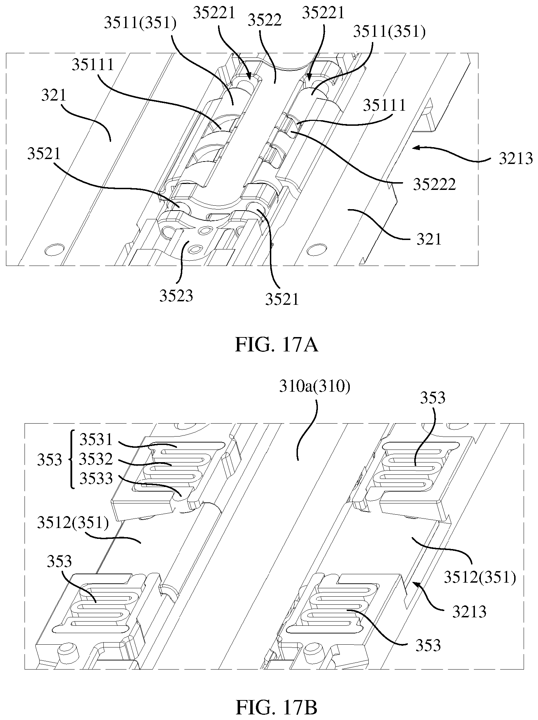

Referring to FIG. 12, the synchronous damping assembly 350 may include a synchronous damping swing arm 351, a synchronous limiting structure 352, and a damping member 353. FIG. 17A is a partial enlarged view at a position D in FIG. 11A, and FIG. 17B is a partial enlarged view at a position E in FIG. 11B. As shown in FIG. 12 and FIG. 17A, the synchronous limiting structure 352 is mounted on the shaft cover 310; and as shown in FIG. 12 and FIG. 17B, the damping member 353 is mounted on the connection frame 321, the synchronous damping swing arm 351 is connected between the shaft cover 310 and the connection frame 321, and the synchronous damping swing arm 351 cooperates with the synchronous limiting structure 352, to implement synchronous movement of the two connection frames 321 located on the two sides of the shaft cover 310. In addition, the synchronous damping swing arm 351 cooperates with the damping member 353, to generate a damping force in a process that the connection frame 321 moves relative to the shaft cover 310, so that the housing assembly 20 stays at the semi-unfolded state.

Referring to FIG. 12, the synchronous damping swing arm 351 includes a shaft sleeve portion 3511 and a sliding plate portion 3512, where the shaft sleeve portion 3511 faces a side on which the shaft cover 310 is located, and the sliding plate portion 3512 extends toward the connection frame 321. As shown in FIG. 17A, the shaft sleeve portion 3511 is engaged with and connected to the synchronous limiting structure 352 arranged on the shaft cover 310; and as shown in FIG. 17B, a second sliding groove 3213 is provided at a part on the connection frame 321 corresponding to the sliding plate portion 3512, and the sliding plate portion 3512 extends into the second sliding groove 3213 and slides along the second sliding groove 3213. In a process that the connection frame 321 moves relative to the shaft cover 310, the shaft sleeve portion 3511 may rotate relative to the synchronous limiting structure 352, and the synchronous limiting structure 352 may implement synchronous movement of shaft sleeve portions 3511 of synchronous damping swing arms 351 located on the two sides of the shaft cover 310, to drive, through the synchronous damping swing arms 351, the connection frames 321 on the two sides of the shaft cover 310 to move synchronously. The sliding plate portion 3512 gets away from or gets close to the shaft cover 310 along with the connection frame 321 and slides in the second sliding groove 3213. In addition, in a process that the sliding plate portion 3512 slides in the second sliding groove 3213, different parts of the sliding plate portion are in contact with the damping member 353 arranged on the connection frame 321, and the sliding plate portion 3512 acts on the damping member 353 to cause the damping member to generate a damping force, thereby providing an acting force for causing the housing assembly 20 to stay at the semi-unfolded state.

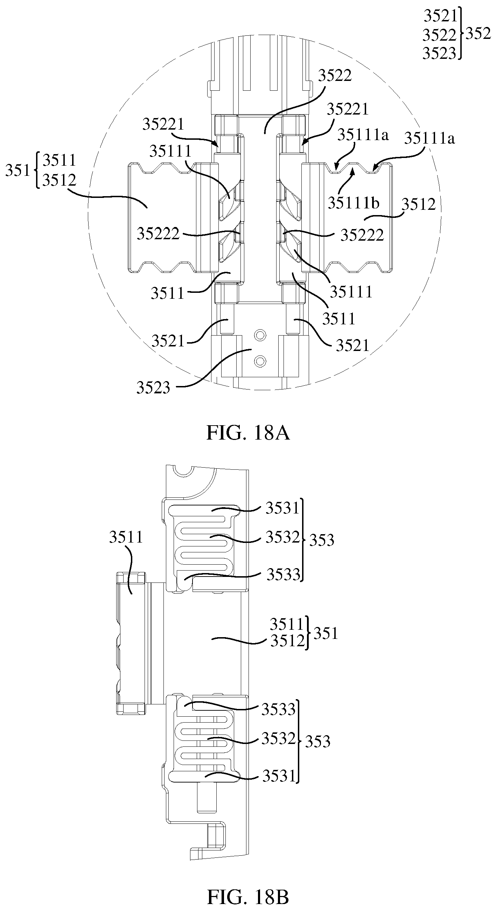

FIG. 18A is a partial structural diagram of cooperation between a synchronous damping swing arm and a synchronous limiting structure. As shown in FIG. 12 and FIG. 18A, the synchronous limiting structure 352 arranged on the shaft cover 310 may include a sliding base 3522 and two second rotating shafts 3521, where the two second rotating shafts 3521 are both arranged on the shaft cover 310, the two second rotating shafts 3521 are symmetrically arranged on the two sides of the shaft cover 310 in the width direction, the sliding base 3522 is sleeved outside the two second rotating shafts 3521, and the sliding base 3522 may slide in an axial direction of the second rotating shaft 3521. Mounting grooves 35221 are provided on two sides of the sliding base 3522, the two second rotating shafts 3521 respectively pass through the mounting grooves 35221 on the two sides, and the shaft sleeve portions 3511 of the synchronous damping swing arms 351 on the two sides of the shaft cover 310 are respectively sleeved on the corresponding second rotating shafts 3521 and are located in the mounting grooves 35221.

In a process that the connection frame 321 moves relative to the shaft cover 310, the shaft sleeve portion 3511 may rotate around the second rotating shaft 3521, and the shaft sleeve portion 3511 may drive the sliding base 3522 to slide in the axial direction of the second rotating shaft 3521 in a rotation process, to transmit power between the shaft sleeve portions 3511 on the two sides through sliding of the sliding base 3522, thereby implementing synchronous movement of the connection frames 321 on the two sides of the shaft cover 310.

The shaft sleeve portion 3511 needs to be sleeved on a part of the second rotating shaft 3521 located between two side groove walls of the mounting groove 35221 of the fixing base. Therefore, when the second rotating shaft 3521 is designed, one ends arranged on the same side of the two second rotating shafts 3521 may be fixedly connected to the shaft cover 310, and the other ends of the two second rotating shafts 3521 are free ends, so that the sliding base 3522 and the shaft sleeve portions 3511 of the synchronous damping swing arm 351 may be sleeved on the second rotating shaft 3521 from a side on which the free end is located. During assembly, the shaft sleeve portion 3511 of the synchronous damping swing arm 351 may be first positioned in the mounting groove 35221 of the sliding base 3522, and one end of the sliding base 3522, the shaft sleeve portion 3511, and the other end of the sliding base 3522 are then sequentially sleeved on the second rotating shaft 3521, to mount the sliding base 3522 and the shaft sleeve portion 3511 of the synchronous damping swing arm 351 on the shaft cover 310 through the second rotating shaft 3521.

A length of the second rotating shaft 3521 is greater than a length of the sliding base 3522, the second rotating shaft 3521 passes through the sliding base 3522, and one end of the second rotating shaft 3521 is a free end. As a result, the sliding base 3522 may fall off the second rotating shaft 3521 in a process of sliding along the second rotating shaft 3521, and the sliding base 3522 cannot be totally limited within a range in which the second rotating shaft 3521 is located. Therefore, an assembly base 3523 may be arranged to limit the sliding base 3522. That is, the synchronous limiting structure 352 may further include the assembly base 3523, where the assembly base 3523 is arranged at an end of the sliding base 3522 through which the second rotating shaft 3521 passes, and the assembly base 3523 is connected to the end of the second rotating shaft 3521 passing through the sliding base 3522. In other words, the assembly base 3523 is located on a side on which the free end of the second rotating shaft 3521 is located and is connected to the free end of the second rotating shaft 3521, and the sliding base 3522 is limited on the second rotating shaft 3521 through the assembly base 3523.

For a manner of implementing synchronous movement of the synchronous damping swing arms 351 on the two sides through the sliding base 3522, referring to FIG. 18A, guiding protrusions 35222 are arranged on opposite wall surfaces of the mounting grooves 35221 on the two sides of the sliding base 3522, where the guiding protrusion 35222 extends toward the shaft sleeve portion 3511, corresponding to the guiding protrusion 35222, a spiral hole 35111 is provided on the shaft sleeve portion 3511, the spiral hole 35111 spirally extends along a side wall of the shaft sleeve portion 3511, and the guiding protrusion 35222 extends into the spiral hole 35111 and may slide along the spiral hole 35111. The guiding protrusions 35222 on the groove walls of the mounting grooves 35221 on the two sides are symmetrically arranged, and the spiral holes 35111 on the shaft sleeve portions 3511 of the synchronous damping swing arms 351 on the two sides are also totally symmetrically provided. Therefore, under sliding guiding effects of the spiral holes 35111 of the shaft sleeve portions 3511 of the synchronous damping swing arms 351 on the two sides and the corresponding guiding protrusions 35222, synchronous rotation and synchronous sliding in the axial direction of the second rotating shaft 3521 can be implemented, thereby implementing synchronous movement of the two connection frames 321 on the two sides of the shaft cover 310.

The synchronous damping swing arm 351 is limited by the sliding plate portion 3512 extending into the second sliding groove 3213 of the connection frame 321, and in a movement process, the synchronous damping swing arm 351 does not move in the axial direction of the shaft cover 310. That is, the shaft sleeve portion 3511 of the synchronous damping swing arm 351 rotates only around the second rotating shaft 3521 and does not move in the axial direction of the second rotating shaft 3521. When the connection frame 321 on one side of the shaft cover 310 suffers from an external force and rotates relative to the shaft cover 310, the shaft sleeve portion 3511 of the synchronous damping swing arm 351 on this side accordingly rotates around the second rotating shaft 3521, under a guiding effect of the spiral hole 35111 of the shaft sleeve portion 3511 to the guiding protrusion 35222 of the sliding base 3522, rotation power of the shaft sleeve portion 3511 is transmitted to the sliding base 3522, to cause the sliding base 3522 to slide in the axial direction of the second rotating shaft 3521, and the sliding base 3522 transmits the power to the shaft sleeve portion 3511 of the synchronous damping swing arm 351 on the other side through cooperation between the guiding protrusion 35222 arranged on the other side of the sliding base and the spiral hole 35111 on the shaft sleeve portion 3511 of the synchronous damping swing arm 351 on the other side, to cause the synchronous damping swing arm 351 on the other side to move synchronously.

In some examples, two guiding protrusions 35222 are arranged on both the mounting grooves 35221 on the two sides of the sliding base 3522, and the two guiding protrusions 35222 are spaced apart in the axial direction of the second rotating shaft 3521. Correspondingly, two spiral holes 35111 may be provided on both the shaft sleeve portions 3511 of the synchronous damping swing arms 351 on the two sides. Through respective cooperation between the two guiding protrusions 35222 and the two spiral holes 35111, the accuracy of synchronous movement of the synchronous damping swing arms 351 on the two sides may be improved, and further, the consistency of movement of the connection frames 321 on the two sides of the shaft cover 310 is improved, thereby improving the consistency and stability of opening and closing between the first housing 100 and the second housing 200. In addition, the solution of cooperation between the two guiding protrusions 35222 and the two spiral holes 35111 may also decompose a friction force during rotation of the synchronous damping swing arms 351, thereby prolonging a service life of the rotating shaft mechanism 300.

Certainly, in a scenario having a higher requirement on synchronous movement accuracy or in a case that mounting space of the synchronous damping swing arm 351 and the sliding base 3522 is sufficient, three or more guiding protrusions 35222 may alternatively be arranged at intervals in the mounting grooves 35221 on the two sides of the sliding base 3522, and three or more spiral holes 35111 are correspondingly provided on the shaft sleeve portions 3511 of the synchronous damping swing arms 351 on the two sides, which is not specifically limited in this embodiment.

FIG. 18B is a partial structural diagram of cooperation between a synchronous damping swing arm and a damping member. Referring to FIG. 18B, for cooperation between the synchronous damping swing arm 351 and the damping member 353, the damping member 353 is mounted on the connection frame 321, and the damping member 353 is located on a side of the sliding plate portion 3512 of the synchronous damping swing arm 351 corresponding to the length direction of the shaft cover 310. For ease of description, in this embodiment, a side wall of the sliding plate portion 3512 corresponding to the damping member 353 is defined as a force transmission side 35121, and the damping member 353 abuts against the force transmission side 35121 of the sliding plate portion 3512. In a process that the connection frame 321 moves relative to the shaft cover 310, the sliding plate portion 3512 slides in the second sliding groove 3213 of the connection frame 321, and along with movement of the sliding plate portion 3512, different parts of the force transmission side 35121 of the sliding plate portion 3512 abut against the damping member 353 to generate pressure with different magnitudes to the damping member 353, so that the damping member 353 generates different degrees of elastic deformation.

It should be noted that, the force transmission side 35121 of the sliding plate portion 3512 squeezes the damping member 353, in a sliding process of the sliding plate portion 3512, different parts of the sliding plate portion 3512 squeeze the damping member 353, and due to different pressure on the damping member 353, the damping member 353 is compressed to different degrees. When the damping member 353 is not compressed or has a small compression amount, the damping member 353 does not generate an elastic force or generates a small elastic force, and a damping force between the connection frame 321 and the shaft cover 310 is small, so that the first housing 100 and the second housing 200 can be easily rotated; and when the damping member 353 has a large compression amount, the damping member 353 generates a large elastic force, a damping force between the connection frame 321 and the shaft cover 310 is large, and the damping force may cause the first housing 100 and the second housing 200 to stay at current positions, so that the housing assembly 20 stays at the semi-unfolded state.

For mounting of the damping member 353 on the connection frame 321, for example, a fixing groove (not shown in the figure) may be provided on the connection frame 321, the fixing groove is located on a side of the second sliding groove 3213 in which the sliding plate portion 3512 is located, the fixing groove may further be in communication with the second sliding groove 3213, the damping member 353 is mounted in the fixing groove, and the damping member 353 extends toward the sliding plate portion 3512 through a part of the fixing groove in communication with the second sliding groove 3213 and abuts against the force transmission side 35121 of the sliding plate portion 3512.

Compared with a conventional solution of mounting the damping member 353 on the shaft cover 310, by mounting the damping member 353 on the connection frame 321, a quantity of components that need to be arranged on the shaft cover 310 is reduced, more mounting space is provided for other components on the shaft cover 310, and a thickness of the shaft cover 310 is reduced. In addition, the damping member 353 is arranged in the fixing groove on the connection frame 321, a thickness of the connection frame 321 is also not increased, so that the rotating shaft mechanism 300 is lighter and thinner and more flexible. In addition, fixing of the connection frame 321 to the damping member 353 is more reliable, and cooperation between the damping member 353 and the sliding plate portion 3512 is more stable, so that abnormal noise during movement of the rotating shaft mechanism 300 can be reduced, and the usability of the foldable electronic device 1 can be improved.

For example, the damping member 353 may be always in a compressed state in the fixing groove, even when the force transmission side 35121 of the sliding plate portion 3512 does not squeeze the damping member 353 or exerts minimal pressure to the damping member 353, the elastic force generated by the damping member 353 in the compressed state can also provide a certain damping force between the connection frame 321 and the shaft cover 310, to ensure the stability of movement of the connection frame 321 relative to the shaft cover 310, thereby ensuring stable movement of the housing assembly 20 and improving the reliability of the foldable electronic device 1.

In an implementation, the damping member 353 may include a fixed end 3531, a deformation segment 3532, and a movable end 3533 connected sequentially. The fixed end 3531 is an end of the damping member 353 away from the sliding plate portion 3512, that is, the fixed end 3531 is away from the force transmission side 35121 of the sliding plate portion 3512, and the fixed end 3531 is fixed on the connection frame 321. For example, the fixed end 3531 abuts against a side groove wall of the fixing groove facing away from the second sliding groove 3213. For the damping member 353 always in the compressed state, the fixed end 3531 of the damping member 353 may abut against the groove wall of the fixing groove only through an elastic force, or the fixed end 3531 of the damping member 353 may alternatively be fixed in the fixing groove in an adhering, locking, or welding manner, to firmly fix the damping member 353. The movable end 3533 is an end of the damping member 353 facing the sliding plate portion 3512, the movable end 3533 is arranged corresponding to a communication part between the fixing groove and the second sliding groove 3213, and the movable end 3533 passes through a side wall of the second sliding groove 3213 to abut against the sliding plate portion 3512. The deformation segment 3532 is connected between the movable end 3533 and the fixed end 3531, the force transmission side 35121 of the sliding plate portion 3512 squeezes the movable end 3533 of the damping member 353, the movable end 3533 transmits an acting force to the deformation segment 3532, and the deformation segment 3532 generates elastic deformation accordingly to provide an elastic force.

For a specific structure and shape of the deformation segment 3532, the deformation segment 3532 may include a plurality of elastic arms connected sequentially. As shown in FIG. 18B, the elastic arms may be connected end to end sequentially, and the entire deformation segment 3532 may extend in a shape of "S". In other examples, the elastic arms may alternatively be in a shape of a closed long circle or a strip-shaped ring and the elastic arms are connected sequentially, or the elastic arms may alternatively be in another shape that can generate elastic deformation, which is not limited in this embodiment.

For a manner in which the force transmission side 35121 of the sliding plate portion 3512 generates pressure with different magnitudes to the damping member 353 in a sliding process, referring to FIG. 18A, in some implementations, a concave portion 35111a and a convex portion 35111b may be alternately arranged on the force transmission side 35121 of the sliding plate portion 3512 in an extending direction thereof, where the concave portion 35111a is recessed toward the middle of the sliding plate portion 3512, and the convex portion 35111b protrudes toward the damping member 353. In a process that the sliding plate portion 3512 gradually moves from a position of abutting against the damping member 353 at a bottommost end of the concave portion 35111a to a position of abutting against the damping member 353 at a topmost end of the convex portion 35111b, the pressure to the damping member 353 changes from small to large, the compression amount of the damping member 353 gradually increases, the damping force between the connection frame 321 and the shaft cover 310 gradually increases, and the movement resistance of the housing assembly 20 gradually increases, until the sliding plate portion 3512 moves to the topmost end of the convex portion 35111b and abuts against the damping member 353. In this case, the compression amount of the damping member 353 is maximized, the damping force between the connection frame 321 and the shaft cover 310 is maximized, and the damping force can support the housing assembly 20 in staying at the semi-unfolded state. On the contrary, in a process that the sliding plate portion 3512 moves from the position of abutting against the damping member 353 at the topmost end of the convex portion 35111b to the position of abutting against the damping member 353 at the bottommost end of the concave portion 35111a, the pressure to the damping member 353 changes from large to small, the compression amount of the damping member 353 gradually decreases, the damping force between the connection frame 321 and the shaft cover 310 gradually decreases, and the movement resistance of the housing assembly 20 gradually decreases.

As shown in FIG. 18A and FIG. 18B, in an example, the concave portion 35111a, the convex portion 35111b, and the concave portion 35111a are sequentially arranged on the force transmission side 35121 of the sliding plate portion 3512 of the synchronous damping swing arm 351 from an end of the force transmission side connected to the shaft sleeve portion 3511 to the other end, when the housing assembly 20 is in the unfolded state, the movable end 3533 of the damping member 353 may abut against a bottommost end of the concave portion 35111a close to the shaft sleeve portion 3511 on the force transmission side 35121 of the sliding plate portion 3512; when the housing assembly 20 is in the semi-unfolded state, the movable end 3533 of the damping member 353 may abut against a topmost end of the convex portion 35111b on the force transmission side 35121 of the sliding plate portion 3512; and when the housing assembly 20 is in the folded state, the movable end 3533 of the damping member 353 may abut against a bottommost end of the concave portion 35111a away from the shaft sleeve portion 3511 on the force transmission side 35121 of the sliding plate portion 3512.

As shown in FIG. 18B, to improve the stability of cooperation between the synchronous damping swing arm 351 and the damping member 353, the damping member 353 may be arranged on two sides of the sliding plate portion 3512 of the synchronous damping swing arm 351. In this case, the two sides of the sliding plate portion 3512 corresponding to the length direction of the shaft cover 310 are both force transmission sides 35121, and the damping members 353 located on the two sides of the sliding plate portion 3512 respectively abut against the force transmission sides 35121 on the two sides. The concave portions 35111a and the convex portions 35111b arranged on the force transmission sides 35121 on the two sides correspond to each other respectively. For example, concave portions 35111a, convex portions 35111b, and concave portions 35111a corresponding to each other respectively are arranged sequentially on the force transmission sides 35121 on the two sides from one ends close to the shaft sleeve portions 3511 to the other ends.

In this way, acting forces are generated between the two sides of the sliding plate portion 3512 of the synchronous damping swing arm 351 and the damping members 353 on the two sides, so that the stability of movement of the sliding plate portion 3512 of the synchronous damping swing arm 351 may be improved, and cooperation between the synchronous damping swing arm 351 and the damping member 353 becomes more stable and reliable. Therefore, movement of the housing assembly 20 become more stable, and the reliability of the housing assembly 20 may be improved. In addition, when the housing assembly 20 stays at the semi-unfolded state, topmost ends of the convex portions 35111b on the force transmission sides 35121 on the two sides of the sliding plate portion 3512 respectively squeeze the damping members 353 on the two sides, compression amounts of the damping members 353 on the two sides are both maximized, and the damping member 353 provides a larger damping force between the connection frame 321 and the shaft cover 310, helping improve the stability of the housing assembly 20 in the semi-unfolded state.

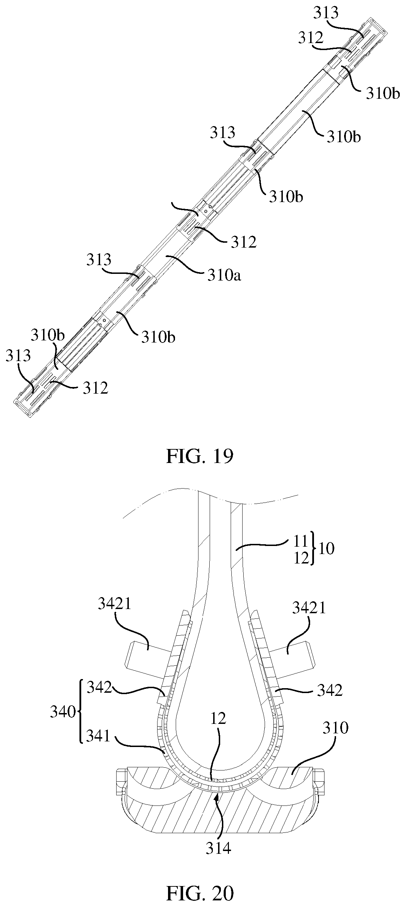

FIG. 19 is a schematic structural diagram of a shaft cover according to an embodiment of this application. As shown in FIG. 11A and FIG. 19, for a structure design of the shaft cover 310, in some implementations, the shaft cover 310 may include a cover plate 310a and a plurality of reinforcing portions 310b. As a main body support structure of the shaft cover 310, the cover plate 310a may be a plate-shaped structure in a shape of a long strip. A thickness of the cover plate 310a is small, to implement connection between components such as the main swing arm 331, the support plate swing arm 332, and the auxiliary swing arm 333 and the shaft cover 310, and the plurality of reinforcing portions 310b are arranged on a side surface of the shaft cover 310 with a small thickness facing the foldable screen 10. In other words, the reinforcing portion 310b may serve as a mounting structure of the components, and a thickness of the reinforcing portion 310b may be slightly larger, helping processing of structures such as the first arc-shaped groove 312 and the second arc-shaped groove 313 in the reinforcing portion 310b. In this way, an entire thickness of the shaft cover 310 may be reduced, to implement lightening and thinning of the rotating shaft structure. In addition, due to the reinforcing portions 310b, the shaft cover 310 also has a sufficient strength, meeting a reliability requirement of the shaft cover 310.

The foregoing blocking edge 311 may be formed at two ends of the cover plate 310a in a length direction, the blocking edge 311 protrudes to the above of the reinforcing portion 310b, the blocking edge 311 limits the support plate 340, and the blocking edge 311 also helps position the reinforcing portion 310b.

For example, the cover plate 310a may be made of a high-strength metal material, to improve the appearance texture of the shaft cover 310. For example, the cover plate 310a may be made of materials such as titanium, steel, aluminum alloy, or titanium alloy. The reinforcing portion 310b may be made of a high-strength polymer material, for ease of formation of structures such as the first arc-shaped groove 312 and the second arc-shaped groove 313 in the reinforcing portion 310b. For example, the reinforcing portion 310b may be made of materials such as polyphenylene sulfide resin, polyphenylene ether ketone resin, polyimide resin, or polysulfone resin, to ensure a strength of the shaft cover 310 while a lightening and thinning requirement of the shaft cover 310 is met.

In addition, the shaft cover 310 may be formed through an integral molding process. That is, the cover plate 310a and the reinforcing portion 310b are of an integrally formed structure. In this way, the shaft cover 310 has better integrity, and mounting of another structure on the cover plate 310a to connect the foregoing components is avoided, so that a structure of the shaft cover 310 may be simplified, improving the processing efficiency of the shaft cover 310. For example, the integrated shaft cover 310 may be manufactured by using a nano molding technology (NanoMolding Technology, NMT). Nanocrystallization is performed on a surface of the cover plate 310a of a metal material, and a polymer material is directly injected and molded on the surface of the cover plate 310a of a metal material to form the reinforcing portion 310b, to form the integrated shaft cover 310.

FIG. 20 is a partial cross-sectional view of a foldable screen and a support plate mounted on a shaft cover according to an embodiment of this application. Referring to FIG. 20, the foldable screen 10 shown in the figure is in a folded state, the support plate 340 is wrapped on the outside of the foldable part 10c of the foldable screen 10, the support plate 340 and the foldable screen 10 jointly form a double droplet-shaped structure, and the figure also shows existence of the foregoing protective gap between the support plate 340 and the foldable screen 10. To enable the shaft cover 310 to stably support the foldable screen 10 in the folded state and the support plate 340, an arc-shaped slot 314 may be provided on a side surface of the shaft cover 310 facing the foldable screen 10, the arc-shaped slot 314 is located in a middle region of the shaft cover 310 in the width direction and extends in the length direction of the shaft cover 310, the arc-shaped slot 314 matches a shape of a bent bottom of the support plate 340, and the bent bottom of the support plate 340 is located in the arc-shaped slot 314 and is supported on a slot wall of the arc-shaped slot 314, so that the bent bottom of the support plate 340 can be smoothly attached in the arc-shaped slot 314, thereby protecting the support plate 340 from being squeezed and keeping a shape of the support plate 340.

As shown in FIG. 11A and FIG. 20, the reinforcing portions 310b are arranged on the side of the shaft cover 310 facing the foldable screen 10, so that the arc-shaped slot 314 may be processed on the reinforcing portions 310b. For the reinforcing portions 310b mainly configured to provide mounting structures of the components such as the main swing arm 331 and the support plate swing arm 332, adjacent reinforcing portions 310b may be in contact with each other or spaced apart according to positions of the components, so that the arc-shaped slot 314 may be processed on each reinforcing portion 310b, and the arc-shaped slot 314 on each reinforcing portion 310b extends in the length direction of the shaft cover 310.

In the description of the embodiments of this application, it should be noted that, unless otherwise explicitly specified and defined, the terms "mount", "connect", and "connection" should be understood in a broad sense. For example, the connection may be a fixed connection, an indirect connection through an intermediate medium, communication inside two elements, or an interactive relationship between two elements. A person of ordinary skill in the art may understand specific meanings of the foregoing terms in the embodiments of this application according to a specific situation.

In the specification, claims, and accompanying drawings of the embodiments of this application, the terms "first", "second", "third", "fourth", and so on (if existing) are intended to distinguish between similar objects but do not necessarily indicate a specific order or sequence.

## Claims

1. A foldable electronic device (1), comprising a first housing (100), a second housing (200), a foldable screen (10), and a rotating shaft mechanism (300), comprising: a shaft cover (310), a main swing arm (331), a support plate swing arm (332), a support plate (340), and at least one connection frame group (320), wherein
the connection frame group (320) comprises two connection frames (321), the two connection frames (321) are respectively located on two sides of the shaft cover (310) in a width direction, and the main swing arm (331) and the support plate swing arm (332) are connected between each connection frame (321) and the shaft cover (310); a first end of the main swing arm (331) is connected to the connection frame (321), and a second end of the main swing arm (331) is slidably and rotatably connected to the shaft cover (310); a first end of the support plate swing arm (332) is connected to the connection frame (321), and a second end of the support plate swing arm (332) is connected to the shaft cover (310); and
the support plate (340) extends in a length direction of the shaft cover (310) and is arranged on a side of the shaft cover (310) facing a foldable screen (10) of the foldable electronic device (1), a side edge of the support plate (340) extends out to a side of the shaft cover (310) and is bridged on the connection frame (321), and the support plate (340) is connected to the support plate swing arm (332), wherein the support plate (340) is a plate-shaped member capable of generating elastic deformation, and the connection frame (321) moves relative to the shaft cover (310) through the main swing arm (331) and the support plate swing arm (332) to switch between an unfolded state and a folded state, to drive the support plate (340) to synchronously switch between an unfolded state and a folded state along with the foldable screen (10);
the connection frames (321) on the two sides of the shaft cover (310) of the rotating shaft mechanism (300) are respectively connected to the first housing (100) and the second housing (200), the foldable screen (10) is located on a side on which the support plate (340) of the rotating shaft mechanism (300) is located, and the foldable (10) screen is connected to the first housing (100) and the second housing (200).

2. The foldable electronic device (1) according to claim 1, wherein a middle region of the support plate (340) in a width direction is a hollowed portion (341), and the hollowed portion (341) covers an entire region of the support plate (340) in a length direction.

3. The foldable electronic device (1) according to claim 2, wherein a plurality of strip-shaped openings (3411) are distributed in the hollowed portion (341), and the strip-shaped openings (3411) extend in the length direction of the support plate (340).

4. The foldable electronic device (1) according to claim 3, wherein in the width direction of the support plate (340), adjacent strip-shaped openings (3411) are provided in a staggered manner in the length direction of the support plate (340).

5. The foldable electronic device (1) according to claim 4, wherein the strip-shaped openings (3411) comprise a first strip-shaped opening (3411a) and a second strip-shaped opening (3411b), the first strip-shaped opening (3411a) is enclosed in a closed shape, and the second strip-shaped opening (3411b) is in communication with an end surface of the support plate (340).

6. The foldable electronic device (1) according to any one of claims 2 to 5, wherein the support plate (340) is a metal plate.

7. The foldable electronic device (1) according to any one of claims 1 to 6, wherein one of the support plate (340) and the support plate swing arm (332) is provided with a positioning hole (3322a), the other is provided with a positioning column (3421) extending to the one, and the positioning column (3421) is inserted into the positioning hole (3322a).

8. The foldable electronic device (1) according to any one of claims 1 to 7, wherein a blocking edge (311) is arranged at two ends of the shaft cover (310) in a length direction, the blocking edge (311) protrudes from a side surface of the shaft cover (310) facing the foldable screen (10), and two ends of the support plate (340) in the length direction respectively abut against corresponding blocking edges (311).

9. The foldable electronic device (1) according to any one of claims 1 to 8, wherein a first rotating shaft (3211) is mounted on the connection frame (321), a first arc-shaped groove (312) is provided on the shaft cover (310), the main swing arm (331) comprises a rotating portion (3311), a connection plate portion (3312), and a first arc-shaped sliding portion (3313) sequentially from the first end to the second end, the rotating portion (3311) is sleeved on the first rotating shaft (3211), and the first arc-shaped sliding portion (3313) slides in the first arc-shaped groove (312).

10. The foldable electronic device (1) according to any one of claims 1 to 9, wherein a first sliding groove (3212) is provided on the connection frame (321), a second arc-shaped groove (313) is provided on the shaft cover (310), the support plate swing arm (332) comprises a sliding shaft portion (3321), a connection portion (3322), and a second arc-shaped sliding portion (3323) sequentially from the first end to the second end, the sliding shaft portion (3321) slides and rotates in the first sliding groove (3212), and the second arc-shaped sliding portion (3323) slides in the second arc-shaped groove (313).

11. The foldable electronic device (1) according to any one of claims 1 to 10, wherein at least two connection frame groups (320) exist, and the at least two connection frame groups (320) are spaced apart in the length direction of the shaft cover (310), wherein
the main swing arm (331) and the support plate swing arm (332) are connected between each of the two connection frames (321) of each connection frame group (320) and the shaft cover (310).

12. The foldable electronic device (1) according to claim 11, wherein the rotating shaft mechanism (300) further comprises a synchronous damping swing arm (351), and the synchronous damping swing arm (351) is connected between each of the two connection frames (321) of the at least one connection frame group (320) and the shaft cover (310), wherein
a second sliding groove (3213) is provided on the connection frame (321), a synchronous limiting structure (352) is arranged on the shaft cover (310), the synchronous damping swing arm (351) comprises a sliding plate portion (3512) and a shaft sleeve portion (3511), the sliding plate portion (3512) slides in the second sliding groove (3213), the shaft sleeve portion (3511) is connected to the synchronous limiting structure (352), and the synchronous limiting structure (352) causes the connection frames (321) located on two sides of the shaft cover (310) to synchronously rotate and slide relative to the shaft cover (310).

13. The foldable electronic device (1) according to claim 12, wherein the synchronous limiting structure (352) comprises a sliding base (3522) and two second rotating shafts (3521), the two second rotating shafts (3521) are symmetrically arranged on two sides of the shaft cover (310) in the width direction, mounting grooves (35221) are provided on two sides of the sliding base, and the two second rotating shafts (3521) respectively pass through the mounting grooves (35221) on the two sides; and
the shaft sleeve portions (3511) of the synchronous damping swing arms (351) on the two sides are respectively sleeved on the second rotating shafts (3521) on the two sides and are respectively located in the mounting grooves (35221) on the two sides, and the sliding base (3522) is configured to drive the shaft sleeve portions (3511) on the two sides to synchronously rotate.

14. The foldable electronic device (1) according to claim 13, wherein opposite groove walls of the mounting grooves (35221) on the two sides are each provided with at least one guiding protrusion (35222), the guiding protrusions (35222) in the mounting grooves (35221) on the two sides are symmetrically arranged, the shaft sleeve portions (3511) on the two sides are each provided with at least one spiral hole (35111), the spiral holes (35111) on the shaft sleeve portions (3511) on the two sides are symmetrically provided, and the guiding protrusions (35222) extend into the corresponding spiral holes (35111).

15. The foldable electronic device (1) according to claim 14, wherein the shaft sleeve portion (3511) is provided with at least two spiral holes (35111), and the spiral holes (35111) are spaced apart in an axial direction of the shaft sleeve portion (3511).

## Patentansprüche

1. Faltbare elektronische Vorrichtung (1), umfassend ein erstes Gehäuse (100), ein zweites Gehäuse (200), einen Faltbildschirm (10) und einen Drehwellenmechanismus (300), umfassend: eine Wellenabdeckung (310), einen Hauptschwenkarm (331), einen Stützplattenschwenkarm (332), eine Stützplatte (340) und mindestens eine Verbindungsrahmengruppe (320), wobei
die Verbindungsrahmengruppe (320) zwei Verbindungsrahmen (321) umfasst, die zwei Verbindungsrahmen (321) sich jeweils auf zwei Seiten der Wellenabdeckung (310) in einer Breitenrichtung befinden, und der Hauptschwenkarm (331) und der Stützplattenschwenkarm (332) zwischen jedem Verbindungsrahmen (321) und der Wellenabdeckung (310) verbunden sind; ein erstes Ende des Hauptschwenkarms (331) mit dem Verbindungsrahmen (321) verbunden ist, und ein zweites Ende des Hauptschwenkarms (331) verschiebbar und drehbar mit der Wellenabdeckung (310) verbunden ist; ein erstes Ende des Stützplattenschwenkarms (332) mit dem Verbindungsrahmen (321) verbunden ist, und ein zweites Ende des Stützplattenschwenkarms (332) mit der Wellenabdeckung (310) verbunden ist; und
die Stützplatte (340) sich in einer Längsrichtung der Wellenabdeckung (310) erstreckt und auf einer einem Faltbildschirm (10) der faltbaren elektronischen Vorrichtung (1) zugewandten Seite der Wellenabdeckung (310) angeordnet ist, eine Seitenkante der Stützplatte (340) sich zu einer Seite der Wellenabdeckung (310) heraus erstreckt und auf dem Verbindungsrahmen (321) überbrückt ist, und die Stützplatte (340) mit dem Stützplattenschwenkarm (332) verbunden ist, wobei die Stützplatte (340) ein plattenförmiges Element ist, das in der Lage ist, eine elastische Verformung zu erzeugen, und der Verbindungsrahmen (321) sich relativ zu der Wellenabdeckung (310) durch den Hauptschwenkarm (331) und den Stützplattenschwenkarm (332) bewegt, um zwischen einem entfalteten Zustand und einem gefalteten Zustand zu wechseln, um die Stützplatte (340) dazu anzutreiben, synchron zusammen mit dem Faltbildschirm (10) zwischen einem entfalteten Zustand und einem gefalteten Zustand zu wechseln;
die Verbindungsrahmen (321) auf den zwei Seiten der Wellenabdeckung (310) des Drehwellenmechanismus (300) jeweils mit dem ersten Gehäuse (100) und dem zweiten Gehäuse (200) verbunden sind, der Faltbildschirm (10) sich auf einer Seite befindet, auf der sich die Stützplatte (340) des Drehwellenmechanismus (300) befindet, und der Faltbildschirm (10) mit dem ersten Gehäuse (100) und dem zweiten Gehäuse (200) verbunden ist.

2. Faltbare elektronische Vorrichtung (1) nach Anspruch 1, wobei ein mittlerer Bereich der Stützplatte (340) in einer Breitenrichtung ein ausgehöhlter Abschnitt (341) ist, und der ausgehöhlte Abschnitt (341) einen gesamten Bereich der Stützplatte (340) in einer Längsrichtung abdeckt.

3. Faltbare elektronische Vorrichtung (1) nach Anspruch 2, wobei eine Mehrzahl von streifenförmigen Öffnungen (3411) in dem ausgehöhlten Abschnitt (341) verteilt sind, und die streifenförmigen Öffnungen (3411) sich in der Längsrichtung der Stützplatte (340) erstrecken.

4. Faltbare elektronische Vorrichtung (1) nach Anspruch 3, wobei in der Breitenrichtung der Stützplatte (340) benachbarte streifenförmige Öffnungen (3411) in der Längsrichtung der Stützplatte (340) versetzt vorgesehen sind.

5. Faltbare elektronische Vorrichtung (1) nach Anspruch 4, wobei die streifenförmigen Öffnungen (3411) eine erste streifenförmige Öffnung (3411a) und eine zweite streifenförmige Öffnung (3411b) umfassen, die erste streifenförmige Öffnung (3411a) in einer geschlossenen Form umschlossen ist, und die zweite streifenförmige Öffnung (3411b) mit einer Endfläche der Stützplatte (340) in Verbindung steht.

6. Faltbare elektronische Vorrichtung (1) nach einem der Ansprüche 2 bis 5, wobei die Stützplatte (340) eine Metallplatte ist.

7. Faltbare elektronische Vorrichtung (1) nach einem der Ansprüche 1 bis 6, wobei eines von der Stützplatte (340) und dem Stützplattenschwenkarm (332) mit einem Positionierungsloch (3322a) versehen ist, das andere mit einer Positionierungssäule (3421) versehen ist, die sich zu dem einen erstreckt, und die Positionierungssäule (3421) in das Positionierungsloch (3322a) eingeführt ist.

8. Faltbare elektronische Vorrichtung (1) nach einem der Ansprüche 1 bis 7, wobei eine Blockierkante (311) an zwei Enden der Wellenabdeckung (310) in einer Längsrichtung angeordnet ist, die Blockierkante (311) von einer dem Faltbildschirm (10) zugewandten Seitenfläche der Wellenabdeckung (310) hervorsteht, und zwei Enden der Stützplatte (340) in der Längsrichtung jeweils an entsprechenden Blockierkanten (311) anschlagen.

9. Faltbare elektronische Vorrichtung (1) nach einem der Ansprüche 1 bis 8, wobei eine erste Drehwelle (3211) auf dem Verbindungsrahmen (321) montiert ist, eine erste bogenförmige Nut (312) auf der Wellenabdeckung (310) vorgesehen ist, der Hauptschwenkarm (331) einen Drehabschnitt (3311), einen Verbindungsplattenabschnitt (3312) und einen ersten bogenförmigen Gleitabschnitt (3313) der Reihe nach von dem ersten Ende zu dem zweiten Ende umfasst, der Drehabschnitt (3311) auf die erste Drehwelle (3211) aufgeschoben ist, und der erste bogenförmige Gleitabschnitt (3313) in der ersten bogenförmigen Nut (312) gleitet.

10. Faltbare elektronische Vorrichtung (1) nach einem der Ansprüche 1 bis 9, wobei eine erste Gleitnut (3212) auf dem Verbindungsrahmen (321) vorgesehen ist, eine zweite bogenförmige Nut (313) auf der Wellenabdeckung (310) vorgesehen ist, der Stützplattenschwenkarm (332) einen Gleitwellenabschnitt (3321), einen Verbindungsabschnitt (3322) und einen zweiten bogenförmigen Gleitabschnitt (3323) der Reihe nach von dem ersten Ende zu dem zweiten Ende umfasst, der Gleitwellenabschnitt (3321) in der ersten Gleitnut (3212) gleitet und sich dreht, und der zweite bogenförmige Gleitabschnitt (3323) in der zweiten bogenförmigen Nut (313) gleitet.

11. Faltbare elektronische Vorrichtung (1) nach einem der Ansprüche 1 bis 10, wobei mindestens zwei Verbindungsrahmengruppen (320) existieren, und die mindestens zwei Verbindungsrahmengruppen (320) in der Längsrichtung der Wellenabdeckung (310) beabstandet sind, wobei
der Hauptschwenkarm (331) und der Stützplattenschwenkarm (332) zwischen jedem der zwei Verbindungsrahmen (321) jeder Verbindungsrahmengruppe (320) und der Wellenabdeckung (310) verbunden sind.

12. Faltbare elektronische Vorrichtung (1) nach Anspruch 11, wobei der Drehwellenmechanismus (300) ferner einen synchronen Dämpfungsschwenkarm (351) umfasst, und der synchrone Dämpfungsschwenkarm (351) zwischen jedem der zwei Verbindungsrahmen (321) der mindestens einen Verbindungsrahmengruppe (320) und der Wellenabdeckung (310) verbunden ist, wobei
eine zweite Gleitnut (3213) auf dem Verbindungsrahmen (321) vorgesehen ist, eine synchrone Begrenzungsstruktur (352) auf der Wellenabdeckung (310) angeordnet ist, der synchrone Dämpfungsschwenkarm (351) einen Gleitplattenabschnitt (3512) und einen Wellenhülsenabschnitt (3511) umfasst, der Gleitplattenabschnitt (3512) in der zweiten Gleitnut (3213) gleitet, der Wellenhülsenabschnitt (3511) mit der synchronen Begrenzungsstruktur (352) verbunden ist, und die synchrone Begrenzungsstruktur (352) veranlasst, dass sich die Verbindungsrahmen (321), die sich auf zwei Seiten der Wellenabdeckung (310) befinden, relativ zu der Wellenabdeckung (310) synchron drehen und verschieben.

13. Faltbare elektronische Vorrichtung (1) nach Anspruch 12, wobei die synchrone Begrenzungsstruktur (352) eine Gleitbasis (3522) und zwei zweite Drehwellen (3521) umfasst, die zwei zweiten Drehwellen (3521) symmetrisch auf zwei Seiten der Wellenabdeckung (310) in der Breitenrichtung angeordnet sind, Montagenuten (35221) auf zwei Seiten der Gleitbasis vorgesehen sind, und die zwei zweiten Drehwellen (3521) jeweils durch die Montagenuten (35221) auf den zwei Seiten hindurchgehen; und
die Wellenhülsenabschnitte (3511) der synchronen Dämpfungsschwenkarme (351) auf den zwei Seiten jeweils auf die zweiten Drehwellen (3521) auf den zwei Seiten aufgeschoben sind und sich jeweils in den Montagenuten (35221) auf den zwei Seiten befinden, und die Gleitbasis (3522) dazu konfiguriert ist, die Wellenhülsenabschnitte (3511) auf den zwei Seiten dazu anzutreiben, sich synchron zu drehen.

14. Faltbare elektronische Vorrichtung (1) nach Anspruch 13, wobei gegenüberliegende Nutwände der Montagenuten (35221) auf den zwei Seiten jeweils mit mindestens einem Führungsvorsprung (35222) versehen sind, die Führungsvorsprünge (35222) in den Montagenuten (35221) auf den zwei Seiten symmetrisch angeordnet sind, die Wellenhülsenabschnitte (3511) auf den zwei Seiten jeweils mit mindestens einem spiralförmigen Loch (35111) versehen sind, die spiralförmigen Löcher (35111) auf den Wellenhülsenabschnitten (3511) auf den zwei Seiten symmetrisch vorgesehen sind, und die Führungsvorsprünge (35222) sich in die entsprechenden spiralförmigen Löcher (35111) hinein erstrecken.

15. Faltbare elektronische Vorrichtung (1) nach Anspruch 14, wobei der Wellenhülsenabschnitt (3511) mit mindestens zwei spiralförmigen Löchern (35111) versehen ist, und die spiralförmigen Löcher (35111) in einer axialen Richtung des Wellenhülsenabschnitts (3511) beabstandet sind.

## Revendications

1. Dispositif électronique pliable (1), comprenant un premier boîtier (100), un deuxième boîtier (200), un écran pliable (10), et un mécanisme d'arbre rotatif (300), comprenant : un couvercle d'arbre (310), un bras oscillant principal (331), un bras oscillant de plaque de support (332), une plaque de support (340), et au moins un groupe d'armatures de connexion (320), dans lequel
le groupe d'armatures de connexion (320) comprend deux armatures de connexion (321), les deux armatures de connexion (321) sont situées respectivement sur deux côtés du couvercle d'arbre (310) dans une direction de la largeur, et le bras oscillant principal (331) et le bras oscillant de plaque de support (332) sont connectés entre chaque armature de connexion (321) et le couvercle d'arbre (310) ; une première extrémité du bras oscillant principal (331) est connectée à l'armature de connexion (321), et une deuxième extrémité du bras oscillant principal (331) est connectée de manière coulissante et rotative au couvercle d'arbre (310) ; une première extrémité du bras oscillant de plaque de support (332) est connectée à l'armature de connexion (321), et une deuxième extrémité du bras oscillant de plaque de support (332) est connectée au couvercle d'arbre (310) ; et
la plaque de support (340) s'étend dans une direction de la longueur du couvercle d'arbre (310) et est agencée sur un côté du couvercle d'arbre (310) faisant face à un écran pliable (10) du dispositif électronique pliable (1), un bord latéral de la plaque de support (340) s'étend vers un côté du couvercle d'arbre (310) et est en pont sur l'armature de connexion (321), et la plaque de support (340) est connectée au bras oscillant de plaque de support (332), dans lequel la plaque de support (340) est un élément en forme de plaque capable de générer une déformation élastique, et l'armature de connexion (321) se déplace par rapport au couvercle d'arbre (310) par l'intermédiaire du bras oscillant principal (331) et du bras oscillant de plaque de support (332) pour commuter entre un état déplié et un état plié, pour amener la plaque de support (340) à commuter de manière synchrone entre un état déplié et un état plié avec l'écran pliable (10) ;
les armatures de connexion (321) sur les deux côtés du couvercle d'arbre (310) du mécanisme d'arbre rotatif (300) sont connectées respectivement au premier boîtier (100) et au deuxième boîtier (200), l'écran pliable (10) est situé sur un côté sur lequel la plaque de support (340) du mécanisme d'arbre rotatif (300) est située, et l'écran pliable (10) est connecté au premier boîtier (100) et au deuxième boîtier (200).

2. Dispositif électronique pliable (1) selon la revendication 1, dans lequel une région médiane de la plaque de support (340) dans une direction de la largeur est une partie évidée (341), et la partie évidée (341) recouvre une région entière de la plaque de support (340) dans une direction de la longueur.

3. Dispositif électronique pliable (1) selon la revendication 2, dans lequel une pluralité d'ouvertures en forme de bande (3411) est répartie dans la partie évidée (341), et les ouvertures en forme de bande (3411) s'étendent dans la direction de la longueur de la plaque de support (340).

4. Dispositif électronique pliable (1) selon la revendication 3, dans lequel dans la direction de la largeur de la plaque de support (340), des ouvertures en forme de bande (3411) adjacentes sont prévues d'une manière décalée dans la direction de la longueur de la plaque de support (340).

5. Dispositif électronique pliable (1) selon la revendication 4, dans lequel les ouvertures en forme de bande (3411) comprennent une première ouverture en forme de bande (3411a) et une deuxième ouverture en forme de bande (3411b), la première ouverture en forme de bande (3411a) est enfermée dans une forme fermée, et la deuxième ouverture en forme de bande (3411b) est en communication avec une surface d'extrémité de la plaque de support (340).

6. Dispositif électronique pliable (1) selon l'une quelconque des revendications 2 à 5, dans lequel la plaque de support (340) est une plaque métallique.

7. Dispositif électronique pliable (1) selon l'une quelconque des revendications 1 à 6, dans lequel l'un parmi la plaque de support (340) et le bras oscillant de plaque de support (332) est pourvu d'un trou de positionnement (3322a), l'autre est pourvu d'une colonne de positionnement (3421) s'étendant vers le premier, et la colonne de positionnement (3421) est insérée dans le trou de positionnement (3322a).

8. Dispositif électronique pliable (1) selon l'une quelconque des revendications 1 à 7, dans lequel un bord de blocage (311) est agencé au niveau de deux extrémités du couvercle d'arbre (310) dans une direction de la longueur, le bord de blocage (311) fait saillie à partir d'une surface latérale du couvercle d'arbre (310) faisant face à l'écran pliable (10), et deux extrémités de la plaque de support (340) dans la direction de la longueur viennent respectivement en butée contre des bords de blocage (311) correspondants.

9. Dispositif électronique pliable (1) selon l'une quelconque des revendications 1 à 8, dans lequel un premier arbre rotatif (3211) est monté sur l'armature de connexion (321), une première rainure en forme d'arc (312) est prévue sur le couvercle d'arbre (310), le bras oscillant principal (331) comprend une partie rotative (3311), une partie de plaque de connexion (3312), et une première partie coulissante en forme d'arc (3313) séquentiellement de la première extrémité à la deuxième extrémité, la partie rotative (3311) est emmanchée sur le premier arbre rotatif (3211), et la première partie coulissante en forme d'arc (3313) coulisse dans la première rainure en forme d'arc (312).

10. Dispositif électronique pliable (1) selon l'une quelconque des revendications 1 à 9, dans lequel une première rainure coulissante (3212) est prévue sur l'armature de connexion (321), une deuxième rainure en forme d'arc (313) est prévue sur le couvercle d'arbre (310), le bras oscillant de plaque de support (332) comprend une partie d'arbre coulissant (3321), une partie de connexion (3322), et une deuxième partie coulissante en forme d'arc (3323) séquentiellement de la première extrémité à la deuxième extrémité, la partie d'arbre coulissant (3321) coulisse et tourne dans la première rainure coulissante (3212), et la deuxième partie coulissante en forme d'arc (3323) coulisse dans la deuxième rainure en forme d'arc (313).

11. Dispositif électronique pliable (1) selon l'une quelconque des revendications 1 à 10, dans lequel au moins deux groupes d'armatures de connexion (320) existent, et les au moins deux groupes d'armatures de connexion (320) sont espacés dans la direction de la longueur du couvercle d'arbre (310), dans lequel
le bras oscillant principal (331) et le bras oscillant de plaque de support (332) sont connectés entre chacune des deux armatures de connexion (321) de chaque groupe d'armatures de connexion (320) et le couvercle d'arbre (310).

12. Dispositif électronique pliable (1) selon la revendication 11, dans lequel le mécanisme d'arbre rotatif (300) comprend en outre un bras oscillant d'amortissement synchrone (351), et le bras oscillant d'amortissement synchrone (351) est connecté entre chacune des deux armatures de connexion (321) du au moins un groupe d'armatures de connexion (320) et le couvercle d'arbre (310), dans lequel
une deuxième rainure coulissante (3213) est prévue sur l'armature de connexion (321), une structure de limitation synchrone (352) est agencée sur le couvercle d'arbre (310), le bras oscillant d'amortissement synchrone (351) comprend une partie de plaque coulissante (3512) et une partie de manchon d'arbre (3511), la partie de plaque coulissante (3512) coulisse dans la deuxième rainure coulissante (3213), la partie de manchon d'arbre (3511) est connectée à la structure de limitation synchrone (352), et la structure de limitation synchrone (352) amène les armatures de connexion (321) situées sur deux côtés du couvercle d'arbre (310) à tourner et à coulisser de manière synchrone par rapport au couvercle d'arbre (310).

13. Dispositif électronique pliable (1) selon la revendication 12, dans lequel la structure de limitation synchrone (352) comprend une base coulissante (3522) et deux deuxièmes arbres rotatifs (3521), les deux deuxièmes arbres rotatifs (3521) sont agencés symétriquement sur deux côtés du couvercle d'arbre (310) dans la direction de la largeur, des rainures de montage (35221) sont prévues sur deux côtés de la base coulissante, et les deux deuxièmes arbres rotatifs (3521) passent respectivement à travers les rainures de montage (35221) sur les deux côtés ; et
les parties de manchon d'arbre (3511) des bras oscillants d'amortissement synchrone (351) sur les deux côtés sont respectivement emmanchées sur les deuxièmes arbres rotatifs (3521) sur les deux côtés et sont respectivement situées dans les rainures de montage (35221) sur les deux côtés, et la base coulissante (3522) est configurée pour amener les parties de manchon d'arbre (3511) sur les deux côtés à tourner de manière synchrone.

14. Dispositif électronique pliable (1) selon la revendication 13, dans lequel des parois de rainure opposées des rainures de montage (35221) sur les deux côtés sont chacune pourvues d'au moins une saillie de guidage (35222), les saillies de guidage (35222) dans les rainures de montage (35221) sur les deux côtés sont agencées symétriquement, les parties de manchon d'arbre (3511) sur les deux côtés sont chacune pourvues d'au moins un trou en spirale (35111), les trous en spirale (35111) sur les parties de manchon d'arbre (3511) sur les deux côtés sont prévus symétriquement, et les saillies de guidage (35222) s'étendent dans les trous en spirale (35111) correspondants.

15. Dispositif électronique pliable (1) selon la revendication 14, dans lequel la partie de manchon d'arbre (3511) est pourvue d'au moins deux trous en spirale (35111), et les trous en spirale (35111) sont espacés dans une direction axiale de la partie de manchon d'arbre (3511).
